(19) 

**Europäisches Patentamt**
**European Patent Office**
**Office européen des brevets**

(11) **EP 2 881 294 B1**

(12) **EUROPEAN PATENT SPECIFICATION**

(45) Date of publication and mention
of the grant of the patent:
**16.05.2018 Bulletin 2018/20**

(51) Int Cl.:
*B60W 10/02* $^{(2006.01)}$        *B60K 6/445* $^{(2007.10)}$
*B60L 11/14* $^{(2006.01)}$        *B60W 10/08* $^{(2006.01)}$
*B60W 20/00* $^{(2016.01)}$        *F16D 25/12* $^{(2006.01)}$

(21) Application number: **13826346.2**

(22) Date of filing: **26.07.2013**

(86) International application number:
**PCT/JP2013/070397**

(87) International publication number:
**WO 2014/021234 (06.02.2014 Gazette 2014/06)**

(54) **HYBRID DRIVE DEVICE**

HYBRIDE ANTRIEBSVORRICHTUNG

DISPOSITIF D'ENTRAÎNEMENT HYBRIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2012 JP 2012171854**

(43) Date of publication of application:
**10.06.2015 Bulletin 2015/24**

(73) Proprietor: **Aisin Seiki Kabushiki Kaisha
Kariya-shi Aichi 448-8650 (JP)**

(72) Inventors:
• **HANEDA Yoshitomi**
  **Kariya-shi**
  **Aichi-ken 448-8650 (JP)**
• **ISHIHARA Yasuhiro**
  **Anjo-shi**
  **Aichi 444-1192 (JP)**
• **ONO Yoshinori**
  **Anjo-shi**
  **Aichi 444-1192 (JP)**

• **NOMURA Masaki**
  **Anjo-shi**
  **Aichi 444-1192 (JP)**
• **YOSHIMURA Shiko**
  **Anjo-shi**
  **Aichi 444-1192 (JP)**
• **TAKAMI Shigeki**
  **Anjo-shi**
  **Aichi 444-1192 (JP)**
• **ATARASHI Tomoo**
  **Anjo-shi**
  **Aichi 444-1192 (JP)**
• **KOSHIDA Takafumi**
  **Anjo-shi**
  **Aichi 444-1192 (JP)**

(74) Representative: **Kramer Barske Schmidtchen
Patentanwälte PartG mbB
European Patent Attorneys
Landsberger Strasse 300
80687 München (DE)**

(56) References cited:
JP-A- 2009 103 305     JP-A- 2010 076 678
JP-A- 2012 086 596     JP-B2- 4 751 537

EP 2 881 294 B1

**Description**

[Technical Field]

This invention relates to a hybrid drive device which is equipped with a clutch for connecting or disconnecting the output shaft of the engine and the input shaft of a planetary gear mechanism and a motor/generator rotating in association with the rotation of the input shaft.

[Background Art]

Conventionally, a hybrid drive device has been proposed as shown in the Patent Literature 1, which is formed by an engine, a clutch connecting or disconnecting the output shaft of the engine and an input shaft of the planetary gear mechanism and a motor/generator rotating in association with the rotation of the input shaft. According to this hybrid drive device shown in the Patent Literature 1, the engine is restarted from the engine being in a stopped state by gradually increasing the engine rotation speed by gradually transmitting the torque from the motor/generator to the engine by gradually connecting the clutch which has been in a disconnected state.

On the other hand, according to the disclosure of Patent Literature 2, when the engine is started, the clutch is going to be engaged and a position of the clutch, where the input shaft of the transmission starts rotation from the stopped state, is memorized as a "touch point" and another point where the clutch returns by a certain amount from the touch point is memorized as a "stand-by point". Further, this Patent Literature 2 discloses the technology in which when the engine is going to be stopped from the activated state, the clutch is going to be engaged during the engine under inertia rotation and a position of the clutch where the input shaft of the transmission starts rotation from the stopped state is memorized as a "touch point" and another point where the clutch returns by a certain amount from the touch point is memorized as a "stand-by point".

[Citation List]

[Patent Literature]

     Patent Literature 1: JP2010-76678A
     Patent Literature 2: JP4751537B

JP 2010076678 A discloses a hybrid driving device provided with an input member connected to an engine, a first motor/generator, a second motor/generator, an output member connected to a wheel, a differential gear device having three rotary elements, an engagement element selectively connecting the input member to an engine, a power extraction part for extracting power for driving an auxiliary machine, and a control device for driving the first motor/generator so as to rotate a second rotary element of the differential gear device at a rotation speed required for an auxiliary machine by disengaging the engagement element during the stop of the engine.

JP 2012-086596 A discloses a vehicular learning device including an engine, a controllable clutch, a transmission having an input shaft connected with the engine via the clutch and an output shaft connected with driving wheels of a vehicle, and a motor generator which can output power to the driving wheels while the transmission is set at a neutral state.

JP 2009-103305 A discloses a method and device for detecting an error in a clutch.

[Summary of Invention]

[Technical Problem(s)]

However, according to the hybrid drive device disclosed in the Patent Literature 1, it is necessary to provide a surplus clutch releasing amount considering a possible deviation of the touch point of individual devices and deterioration with time. Therefore, even the clutch engagement control begins, generation of the transmitting torque may be delayed due to the extra clutch releasing amount, which may lead to the delay of engine start. Further, a difference between the ECU confirmed as a touch point and a touch point actually occurred during vehicle operation may cause the difference in torque amount between the actually transmitted torque and a desired clutch transmitting torque upon engagement of the clutch. This difference will make it difficult to accurately control clutch torque transmission, thereby to generate deviation of increasing speed of engine rotation speed when the engine is started. This will cause occurrence of shocks or elongation of engine starting operation.

It is noted here that since in the hybrid drive device according to the Patent Literature 1, the rotation speed of the input shaft depends on the rotation speed of the motor/generator, the input shaft cannot be freely rotatable and therefore, the technology of detecting the touch point disclosed in the Patent literature 2 cannot be applied to the hybrid drive device disclosed in the patent Literature 1.

Further, according to the disclosure in the Patent Literature 2, the clutch is going to be engaged during the engine being in an inertia rotation and the touch point of the clutch position is detected where the input shaft of the transmission starts rotation from the stopped state. Therefore, influenced by the engine vibration, the detecting accuracy of the touch point may be worsened. Further, under the vehicle being running, the temperature of the clutch may be varied and as the result, the touch point is varied. However, according to the technology disclosed in the Patent Literature 2, the touch point is detected only at the time the engine is started and at the time the activating engine is stopped and accordingly, the touch point cannot be changed in response to the clutch temperature change.

The present invention was made in consideration with the above problems and the object of the invention is to provide a technology that can detect a touch point where the clutch starts engagement in a hybrid drive device having a clutch for connecting or disconnecting the output shaft of the engine and the input shaft of a planetary gear mechanism and a motor/generator rotating in association with the rotation of the input shaft.

[Solution to Problem(s)]

This object is achieved by a hybrid drive device in accordance with claim 1. Further developments of the invention are given in the dependent claims.

[Advantageous effects of Invention]

According to the invention associated with claim 1, the touch point detecting means detects the clutch state when the change of the state of the motor/generator is detected by the state change detecting means as the touch point where the clutch starts engagement. In other words, when the clutch is engaged that has been in the disconnected state, an engine friction torque or an engine inertia may influence on the operation of the motor/generator thereby to change the rotation speed and torque of the motor/generator. Therefore, by detecting such changes of the rotation speed or torque of the motor/generator, the touch point, where the clutch starts engagement that has been in the disconnected state, can be detected. Further, since the touch point is detected based on the state change of the motor/generator, an accurate detection of the touch point can be performed without being interfered by an engine vibration. This can improve the accuracy of detection of the touch point. Further, the touch point detecting means detects the touch point based on the change of the rotation speed of the motor/generator and at the same time detects an erroneous detection of the touch point detected based on the change of the torque of the motor/generator. In other words, even when a rotation speed is changed, unless such change corresponds to the change of the torque of the motor/generator, the detection of the touch point is regarded as an erroneous detection. In order to avoid such situation, comparing with the detection only by the change of the rotation speed of the motor/generator, such erroneous detection can be excluded to improve the accuracy of the detection of the touch point according to this structure. Further, the touch point detecting means detects the touch point based on the change of the torque of the motor/generator and at the same time detects an erroneous detection of the touch point detected based on the change of the rotation speed of the motor/generator. In other words, even when a torque is changed, unless such change corresponds to the change of the rotation speed of the motor/generator, the detection of the touch point is regarded as an erroneous detection. In order to avoid such situation, comparing with the detection by the change of the torque of the motor/generator only, such erroneous detection can be excluded to improve the accuracy of the detection of the touch point according to this structure.

According to the invention associated with claim 2, the touch point detecting means detects the touch point by controlling the rotation of the motor/generator to make the rotation speed of the input shaft to be the target input shaft rotation speed. This can make the rotation speed of the input shaft to be an appropriate rotation speed by which the touch point is detected, even the vehicle is running under any vehicle speed or even the vehicle is in stopped state. Thus the touch point can be accurately detected.

According to the invention associated with claim 3, the planetary gear mechanism is provided which includes the first element, the second element and the third element arranged in order with the distance corresponding to the gear ratio on the collinear chart which represents relative rotation speed ratio with the straight line. One of the first and the second elements is connected to the motor/generator with rotation, the other of the first and the second elements is connected to the drive wheel with rotation and the second element is connected to the input shaft in rotation. Thus, the touch point detecting means detects the touch point by controlling the rotation of the motor/generator to make the rotation speed of the input shaft to be any desired input shaft rotation speed. This can make the rotation speed of the input shaft to be an appropriate rotation speed by which the touch point is detected, even the vehicle is running with any vehicle speed or even the vehicle is in a stopped state. Thus the touch point can be accurately detected.

According to the invention associated with claim 4, the touch point detecting means detects the touch point only when the rotation speed of the input shaft is within an allowable rotation speed having a predetermined allowable rotation speed range. When the rotation speed of the input shaft is slower than the predetermined rotation speed, which means that the rotation speed difference between the input shaft and the output shaft becomes small, the state change of the motor/generator is not so large and accordingly, it may be difficult to detect the touch point by using the state change of the motor/generator. Therefore, the detection of the touch point by utilizing the state change of the motor/generator would not be performed due to such difficulty in detecting by a scarce state change. As a result, this may lead to an inaccurate detection. On the other hand, when the rotation speed of the input shaft is faster than the predetermined rotation speed, which may generate a blurring of center (deviation of the center) of the clutch member which is connected to the input shaft and an erroneous touch point which position is deviated from a right place of touch point to be detected to the position of clutch being released. Accordingly, when the rotation speed of the input shaft is faster than the predetermined rotation speed, the touch point detection is not performed to thereby prevent occurrence of inaccurate detection. Thus the accuracy of detection of the touch point can be improved.

According to the invention associated with claim 5, the state change detecting means detects the change of the rotation speed of the motor/generator as a state of change of the motor/generator. When the clutch is engaged that has been in the disconnected state, an engine friction torque or an engine inertia may influence on the operation of the motor/generator thereby to change the rotation speed. Therefore, a sure detection of the touch point can be achieved.

According to the invention associated with claim 6, the state change detecting means detects a torque of the rotation drive force change generated by the motor/generator as a state change of the motor/generator. Accordingly, when the clutch is engaged that has been in the disconnected state, an engine friction torque or an engine inertia may influences on the operation of the motor/generator thereby to change the torque of the motor/generator. Therefore, a sure detection of the touch point can be achieved.

According to the invention associated with claim 7, the touch point detecting means detects the touch point by changing the state of the motor/generator by gradually engaging the clutch which has been in the disconnected state and after the detection of the touch point, releases the engagement of the clutch. Accordingly, the touch point can be detected at any timing when the clutch has been in a disconnected state.

According to the invention associated with claim 8, the touch point detecting means detects the touch point by detecting the state of the motor/generator upon engagement of the clutch which has been in a disconnected state. Therefore, the touch point is detected upon the engaging operation of the clutch which has been in the disconnected state. According to this structure, it is not necessary to engage the clutch just for the purpose of detecting a touch point. Thus, an unnecessary energy consumption can be prevented which may occur upon detection of the touch point.

According to the invention associated with claim 9, in the first touch point detection start processing, the touch point detecting means detects the touch point by changing the state of the motor/generator by gradually engaging the clutch which has been in the disconnected state when the touch point detecting means judges that a predetermined first defined time or more elapsed from a previous detection of the touch point in the first touch point detection start processing or in a second touch point detection start processing and after the detection of the touch point, releases the engagement of the clutch and in the second touch point detection processing, the touch point detecting means detects the touch point by changing the state of the motor/generator upon engagement of the clutch which has been in the disconnected state when the touch point detecting means judges that a predetermined second defined time or more elapsed from a previous detection of the touch point in the first touch point detection start processing or in the second touch point detection start processing. The predetermined second defined time is set to be shorter than the predetermined first defined time. When the vehicle is running, frequency of engaging the clutch which has been in a disconnected state is limited. However, since the second defined time is set to be shorter than the first defined time, a frequency of detecting the touch point upon engagement of the clutch which has been in a disconnected state becomes increasing and the detection of touch point can be performed more closer to practical performance. Further, since the first defined time is set to be longer than the second defined time, frequent decisions of the detection start at the first touch point detection start processing can be prevented to refrain unnecessary consumption of energy for unnecessary detection of the touch point can be also refrained. By setting the first and the second defined times appropriately, the touch point change due to the temperature change of the clutch during the vehicle being under running state can be performed and any deviation of touch point during the vehicle being under running state can be prevented.

[Brief Explanation of Attached Drawings]

[Fig. 1] Fig. 1 is a skeleton view indicating the structure of a hybrid drive device according to a first embodiment of the invention;

[Fig. 2A] Fig. 2A is a collinear chart of the planetary gear mechanism under electrically operated running mode and under hybrid running mode;

[Fig. 2B] Fig. 2B is a collinear chart of the planetary gear mechanism under electrically operated running mode and under hybrid running mode;

[Fig. 3] Fig. 3 is a flowchart of the first touch point detection start processing which is a control program executed at the control portion of Fig. 1;

[Fig. 4] Fig. 4 is a flowchart of the second touch point detection start processing which is a control program executed at the control portion of Fig. 1;

[Fig. 5] Fig. 5 is a flowchart of the first engine start processing which is a control program executed at the control portion of Fig. 1;

[Fig. 6] Fig. 6 is a flowchart of the second engine start processing which is a control program executed at the control portion of Fig. 1;

[Fig. 7] Fig. 7 is a flowchart of the touch point detection processing according to the first embodiment, which is a control program executed at the control portion of Fig. 1;

[Fig. 8] Fig. 8 is a flowchart of the touch point detection processing according to the second embodiment, which is a control program executed at the control portion of Fig. 1;

[Fig. 9] Fig. 9 is a flowchart of stand-by position change processing which is a control program executed at the control portion of Fig. 1;

[Fig. 10] Fig. 10 is a time chart indicating an elapsed time from the previous detection of the touch point, running mode of the vehicle and the touch point detection execution.

[Embodiments for Implementing Invention]

(Structure of Hybrid Drive Device)

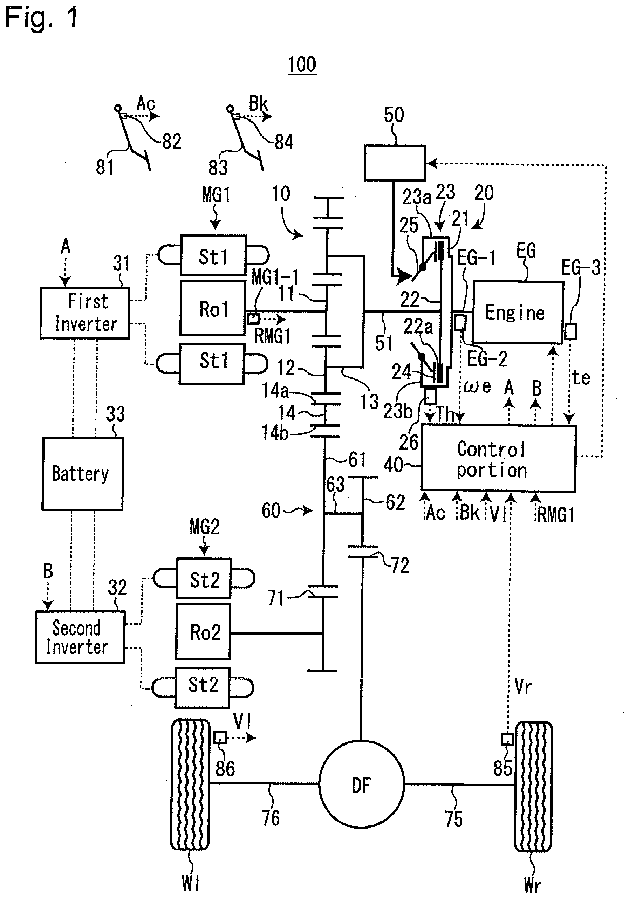

The embodiment (First embodiment) of the hybrid drive device 100 will be explained with reference to the attached drawings. It is noted here that the broken lines indicated in Fig. 1 indicate the information transmittal route for various information and the one-dot chain lines indicate the transmittal route for electricity. The hybrid vehicle (hereinafter referred to as just a "vehicle") is equipped with the hybrid drive device 100. The hybrid drive device 100 according to this embodiment includes an engine EG, a first motor/generator MG1, a second motor/generator MG2, a planetary gear mechanism 10, a clutch 20, a first inverter 31, a second inverter 32, a battery 33, an actuator 50 and a control portion 40. It is noted here that hereinafter the expression of "clutch being under engagement" means the state of clutch 20 changed from the clutch being in a disengaged state to the clutch having been in connected state.

The engine EG includes a gasoline engine or a diesel engine using a fuel of hydrocarbon system such as gasoline or light gas and applies a rotation drive force to the drive wheels Wl and Wr. The rotation drive force is outputted from the engine to an output shaft EG-1 based on the control signal from the control portion 40. An engine rotation speed sensor EG-2 formed by a resolver etc., is provided in the vicinity of the output shaft EG-1. The engine rotation speed sensor EG-2 detects the engine rotation speed $\overline{\omega}e$ which corresponds to the rotation speed of the output shaft EG-1. The detected signal is outputted to the control portion 40. The engine EG is equipped with a water temperature sensor EG-3 which detects the temperature "te" of a coolant for cooling the engine EG and outputs the detected signal to the control portion 40. Further, the engine EG is equipped with a fuel injection device (not shown) for injecting fuel to the suction port and each cylinder. Further, when the engine EG is a gasoline type engine, ignition plug (not shown) is provided at each cylinder.

The clutch 20 is disposed between the output shaft EG-1 and an input shaft 51 of the planetary gear mechanism 10 and connects or disconnects the output shaft EG-1 and the input shaft 51 for electrically controlling a "clutch transmitting torque" therebetween. Any type clutch can be used as long as such control can be made. According to this embodiment, the clutch 20 is of dry-type, single plate, normally closed type and includes a flywheel 21, a clutch disc 22, a clutch cover 23, a pressure plate 24 and a diaphragm spring 25. The flywheel 21 is a disc-shaped plate having a predetermined mass. The flywheel 21 is connected to the output shaft EG-1 and rotates unitary therewith. The clutch disc 22 is of a disc plate shape and a friction material 22a is provided on the outer brim portion of the disc and faces to the flywheel 21 and is engageable with or detachable from the flywheel 21. The clutch disc 22 is connected to the input shaft 51 and rotates unitary therewith.

The clutch cover 23 is formed by a cylindrical portion 23a connected to the outer brim portion of the flywheel 21 provided at the outer peripheral side of the clutch disc 22 and an annular plate shaped side wall 23b extending inward in a radial direction from the end portion of the cylindrical portion 23a opposite to the connecting portion with the flywheel 21. The pressure plate 24 is of annular shape and faces to the clutch disc 22 at the opposite side to the facing surface with the flywheel 21 and is engageable with or disengageable from the clutch disc 22.

The diaphragm spring 25 is a so-called dish spring and a diaphragm inclined in a thickness direction is formed. At the central portion of the diaphragm spring in a radial direction is in contact with the inner brim portion of a side peripheral wall 23b of the clutch cover 23 and outer brim portion of the diaphragm spring 25 is in contact with the pressure plate 24. The diaphragm spring 25 pressurizes the clutch disc 22 onto the flywheel 21 through the pressure plate 24. Under such pressurized condition, the friction material 22a is pressed by the flywheel 21 and the pressure plate 24 and the clutch disc 22 and the flywheel 21 are rotated together by the friction force generated between the flywheel 21 and the pressure plate 24 to thereby connect the output shaft EG-1 and the input shaft 51.

A temperature sensor 26 is provided within a housing (not shown) which accommodates the clutch 20. The temperature "Th" in the housing detected by the temperature sensor 26 is inputted to the control portion 40.

The actuator 50 varies the transmitting torque of the clutch 20 by driving the clutch 20. The actuator 50 presses the inner brim portion of the diaphragm spring 25 or releases the pressurization force thereon based on the instructions from the control portion 40. The actuator 50 according to this embodiment is an electric type actuator. When the actuator 50 presses or pushes the inner brim portion of the diaphragm spring 25 towards the flywheel 21 side, the diaphragm spring 25 is deformed and the outer brim portion thereof is deformed in a direction separated from the flywheel 21. Then the deformation of the diaphragm spring 25 gradually decreases the pressing force of the flywheel 21 and the pressure plate 24 to the clutch disc 22 and finally the transmitting torque between the clutch disc 22 and the flywheel 21 and the pressure plate 24 is decreased to disconnect the output shaft EG-1 and the input shaft 51. Thus, the control portion 40 randomly varies the transmitting torque between the clutch disc 22 and the flywheel 21 by actuating the actuator 50.

The first motor/generator MG-1 is operated as a motor for applying rotation drive force to the drive wheels Wl and Wr, and at the same time used as a generator which converts a kinetic energy of the vehicle to the electricity. The first motor/generator MG1 is formed by a first stator St1 fixed to a case (not shown) and a first rotor Ro1 rotatably provided at the inner peripheral side of the first stator St1. It is noted that a rotation speed sensor MG1-1 is provided in the vicinity of the first rotor Ro1 which detects the rotation speed $\varpi$MG1r of the first motor/generator MG1 (first rotor Ro1) and outputs the detected signal to the control portion 40.

The first inverter 31 is electrically connected to the first stator St1 and the battery 33. The first inverter 31 is connected to the control portion 40 and establishes communication therewith. The first inverter 31 converts the DC current supplied from the battery 33 into the AC current by increasing the voltage based on the control signal from the control portion 40 and the converted AC current is supplied to the first stator St1 to generate the rotation drive force by the first motor/generator MG1 thereby the first motor/generator MG1 being used as a motor. The first inverter 31 controls the first motor/generator MG1 to function as a generator based on the control signal from the control portion 40 and the AC current generated at the first motor/generator MG1 is converted into the DC current and at the same time the voltage is decreased, thereby charging the battery 33.

The second motor/generator MG2 is operated as a motor for applying rotation drive force to the drive wheels Wl and Wr, and at the same time used as a generator which converts a kinetic energy of the vehicle to the electricity. The second motor/generator MG2 is formed by a second stator St2 fixed to a case (not shown) and a second rotor Ro2 rotatably provided at the inner peripheral side of the second stator St2.

The second inverter 32 is electrically connected to the second stator St2 and the battery 33. The second inverter 32 is connected to the control portion 40 and establishes communication therebetween. The second inverter 32 converts the DC current supplied from the battery 33 into the AC current by increasing the voltage based on the control signal from the control portion 40 and the converted AC current is supplied to the second stator St2 to generate the rotation drive force by the second motor/generator MG2 thereby the second motor/generator MG2 being used as a motor. The second inverter 32 controls the second motor/generator MG2 to function as a generator based on the control signal from the control portion 40 and the AC current generated at the second motor/generator MG2 is converted into the DC current and at the same time the voltage is decreased, thereby charging the battery 33.

The planetary gear mechanism 10 divides and delivers the rotation drive force of the engine EG into the first motor/generator MG1 side and the differential mechanism DF side, which will be explained later and is formed by a sun gear 11, a planetary gear 12, a carrier 13 and a ring gear 14. The sun gear 11 is connected to the first rotor Ro1 for unitary rotation therewith. The planetary gear 12 is provided at the periphery of the sun gear 11 with a plurality of numbers and engages with the sun gear 11. The carrier 13 rotatably (revolution) supports the plurality of planetary gears 12. The carrier 13 is connected to the input shaft 51 for unitary rotation therewith. The ring gear 14 is of ring shaped and is formed with an inner gear 14a at the inner peripheral surface thereof. An output gear 14b is provided at the outer peripheral surface of the ring gear 14. The inner gear 14a is in engagement with the plurality of planetary gears 12.

A reduction gear 60 is formed by a first gear 61, a second gear 62 and a connecting shaft 63. The first gear 61 is in engagement with the output gear 14b of the ring gear 14 and at the same time in engagement with an output gear 71 which unitary rotates with the second rotor Ro2. The second gear 62 is in connection with the first gear 61 through the connecting shaft 63 and rotates unitary with the first gear 61. It is noted that the second gear 62 has a diameter smaller than the diameter of the first gear 61 and the number of teeth of the second gear 62 is smaller than that of the first gear 61. The second gear 62 is in engagement with the input gear 72.

The differential mechanism DF delivers the rotation drive force transmitted to the input gear 72 to drive shafts 75 and 76 which are respectively connected to the drive wheels Wl and Wr. As explained above, the input shaft 51 is rotatably connected to the drive wheels Wl and Wr through the planetary gear mechanism 10, reduction gear 60, differential mechanism DF and drive shafts 75 and 76. It is noted that no second clutch different form the clutch 20 exists between the engine EG and the clutch 20. Further, it is noted that no other second clutch different from the clutch 20 exists between the clutch 20 and the drive wheels Wl and Wr.

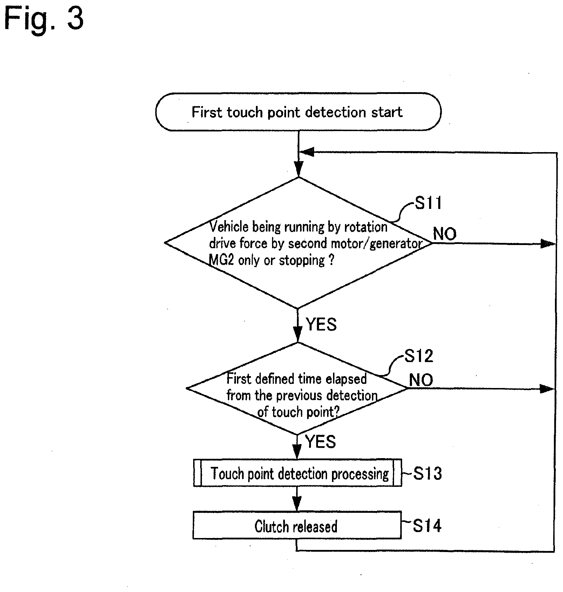

The control portion 40 generally controls the hybrid drive device 100 and includes an ECU. The ECU is equipped with a memory portion formed by an input/output interface, CPU, RAM, ROM and non-volatile memory respectively connected with one another through bus lines. The CPU executes the program corresponding to the flowchart illustrated in Figs. 3 through 9. The RAM temporally memorizes variables necessary for executing the program. The memory portion memorizes the detected values from the various sensors and also memorizes the programs. The control portion 40 may be formed by one single ECU or may be formed by a plurality of ECUs.

The control portion 40 obtains the information on acceleration opening degree Ac which means the absolute value of the operating amount of an acceleration pedal 81 detected by an acceleration sensor 82. The control portion 40 further obtains the vehicle wheel speeds Vr and Vl from the vehicle wheel sensors 85 and 86 which detect rotation speed of each of the vehicle wheels Wl and Wr (not necessarily the drive wheels) and then the vehicle speed V can be calculated based on the obtained vehicle wheel speed Vr and Vl. The control portion 40 calculates the "required drive force" based on the acceleration opening degree Ac and the vehicle speed V. The control portion 40 obtains the information on brake opening degree Bk which means the absolute value of the operating amount of a brake pedal 83 detected by a brake sensor 84. The control portion 40 calculates the "required braking force" based on the brake opening degree Bk. The control portion 40 calculates the input shaft rotation speed $\varpi l$ which corresponds to the rotation speed of the input shaft 51 (carrier 13) based on the rotation speed $\varpi MG1r$ of the first motor/generator MG1 inputted from the rotation speed sensor MG1-1, the rotation speed $\varpi MG2r$ of the second motor/generator MG2 (calculated from the vehicle speed V) and the number of teeth between the sun gear 11 and the inner gear 14a.

(Explanation of Electric Running Mode and Split Running Mode)

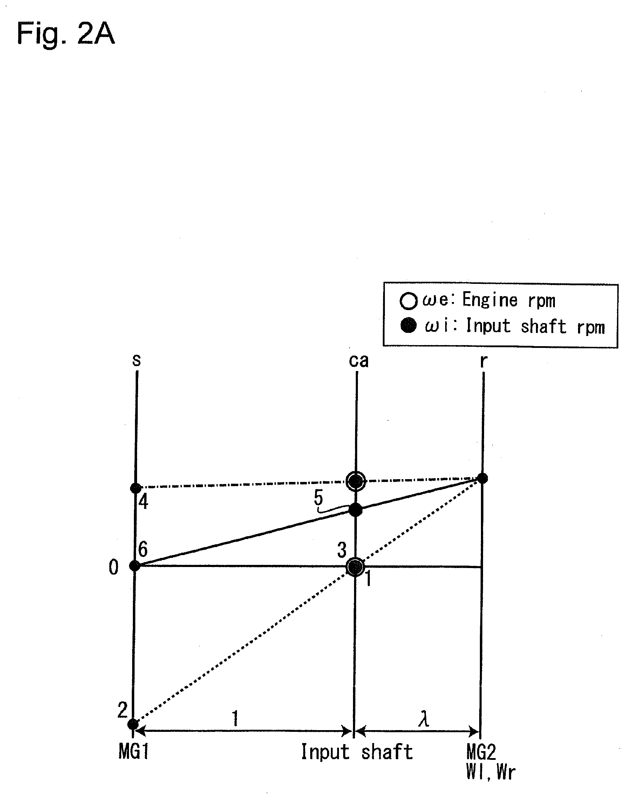

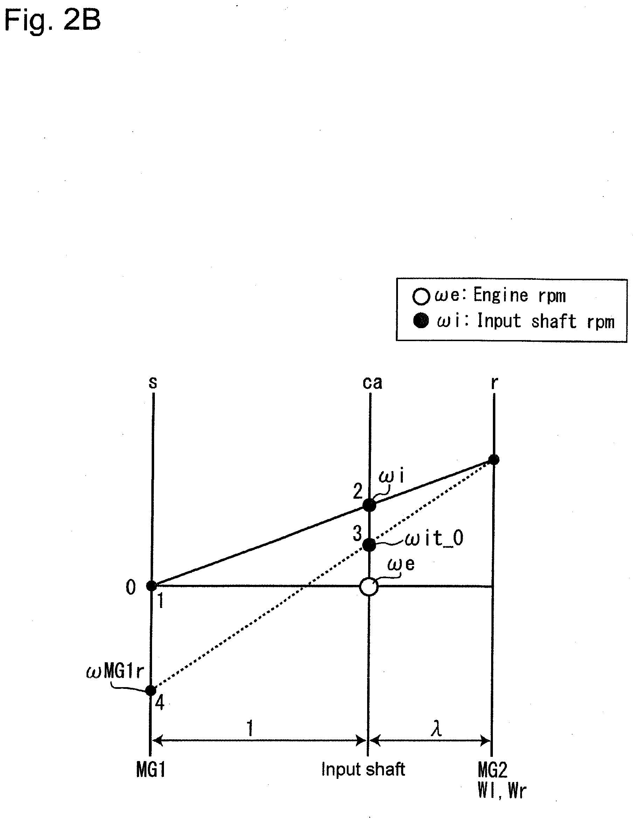

Next, using the collinear chart illustrated in Fig. 2, the "Electric running mode" and the "Split running mode" will be explained. The vehicle is either in electric running mode or split running mode and both modes are switchable during vehicle in running state. The "Electric running mode" means the running mode in which the vehicle is driven by the rotation drive force of at least one of the first and the second motor/generators MG1 and MG2, whereas the "split running mode" means the running mode in which the vehicle is driven by the rotation drive force of at least one of the first and the second motor/generators MG1 and MG2 and the rotation drive force of the engine EG.

As shown in the collinear chart of Fig. 2, the vertical axis indicates the rotation speed of each rotation element. The area upper than the value zero in Fig. 2 indicates the area where the rotation is in a positive direction and the arear lower than the value zero indicates the area where the rotation is in a negative direction. In Fig. 2, the symbol "s" indicates the rotation speed of the sun gear 11, "ca" indicates the rotation speed of the carrier 13 and "r" indicates the rotation speed of the ring gear 14. In other words, the symbol "s" indicates the rotation speed of the first motor/generator MG1, "ca" indicates the rotation speed of the input shaft 51 and "r" indicates the rotation speed proportion to the rotation speed of the second motor/generator MG2 and the rotation speed of the drive wheels Wl and Wr (vehicle speed). When the clutch 20 is completely engaged, the rotation speed of "ca" becomes the same speed as the rotation speed of the output shaft EG-1 of the engine EG. Assuming that the distance between the vertical lines "s" and "ca" being one (1), the distance between the vertical lines "ca" and "r" becomes the gear ratio "λ" of the planetary gear mechanism 10 (ratio of the number of teeth between the sun gear 11 and the inner gear 14a: the number of teeth of sun gear 11 / the number of teeth of inner gear 14a). As explained, the first motor/generator MG1 (first rotor Ro1), the input shaft 51 and the second motor/generator MG2 are rotated mutually associated with one another.

Under the battery being in sufficiently charged state and the required drive force is sufficiently obtained from the rotation drive force from the first and the second motor/generators MG1 and MG2 only, the vehicle is driven under the "electric running mode".

Under the "electric running mode", when the vehicle is driven by only the rotation drive force from the second motor/generator MG2, the control portion 40 controls the actuator 50 to disconnect the clutch 20. Thus the engine EG and the input shaft 51 are disconnected. The control portion 40 sends the control signal to the second inverter 32 to drive the second motor/generator MG2 to generate the "required drive force". Under this state, as shown by the solid line in Fig. 2A, the second motor/generator MG2 rotates in the positive direction. The engine EG is stopped due to the disconnection with the input shaft 51 (the engine rotation speed $\varpi e$ is zero) (the state of point "1" in Fig. 2A). When the vehicle is driven only by the rotation drive force of the second motor/generator MG2, the clutch 20 is in disconnected state and therefore, the input shaft 51 is freely rotatable. (State of point "5" in Fig. 2A). Therefore, the rotation drive force from the second motor/generator MG2 transmitted to the ring gear 14 is idly rotated within the planetary gear mechanism 10 due to the free rotation of the input shaft 51. Thus, the first motor/generator MG1 does not rotate (the rotation speed $\varpi MG1r$ is zero) (State of point "6" in Fig. 2A). Since the first motor/generator MG1 does not rotate, any rotation loss derived from the rotation of the first motor/generator MG1 (inertia torque of the first rotor Ro1) can be prevented to save electric energy (to improve electricity consumption of the vehicle).

When the vehicle is running under the "electric running mode" and required drive force is not sufficient only by the rotation drive force of the second motor/generator MG2, the control portion 40 outputs the control signal to the actuator 50 to engage the clutch 20 for establishing connection between the output shaft EG-1 and the input shaft 51. At the same time the control portion 40 outputs the control signal to the first and the second inverters 31 and 32 to drive the first and the second motor/generators MG1 and MG2 to obtain the required drive force for the vehicle. Under this state, as shown with the broken line in Fig. 2A the first motor/generator MG1 is rotated in the negative direction (The state of point "2" in Fig. 2A) and the second motor/generator MG2 is rotated in the positive direction and the engine EG is stopped. (The state of point "3" in Fig. 2A). Under this state, the friction rotation drive force EG which is a negative torque function as a reaction force receiver for supporting the carrier 13. Therefore, the maximum rotation drive force that the first motor/generator MG1 can output is limited to the torque that the rotation drive force transmitted to the input shaft 51 by the first motor/generator MG1 is equal to or less than the friction torque of the engine EG.

When the required drive force is not sufficient only by the rotation drive force generated by the first and the second motor/generators MG1 and MG2 or when the battery is not sufficiently charged, the vehicle is driven under the "split running mode".

Under the vehicle being in "split running mode", the control portion 40 controls the actuator 50 to actuate the clutch 20 to be in engagement state and at the same time the control portion 40 controls the engine EG to generate a predetermined rotation drive force. Thus, the engine EG and the input shaft 51 are connected and the engine rotation drive force is inputted to the carrier 13 and the engine rotation drive force transmitted to the carrier 13 is divided in two and transmitted to the sun gear 11 and the ring gear 14, respectively. Thus, the engine torque is divided and delivered to the first motor/generator MG1 and the drive wheels Wr and Wl.

Under the "split running mode", the engine EG is maintained to a highly efficient state (high efficient state in fuel consumption ratio). Under this state, as shown with the one-dot chain line in Fig. 2A, the first motor/generator MG1 receives the divided rotation drive force from the engine EG and rotates in the positive direction (state of point "4" in Fig. 2A) and generates the electricity. Thus, the first motor/generator MG1 outputs a motor/generator rotation drive force in a negative direction to the sun gear 11. In other words, the first motor/generator MG1 functions as a reaction force receiver which supports the reaction force of engine torque TE. Accordingly, the rotation drive force of the engine EG is distributed to the ring gear 14 and eventually to the drive wheels Wl and Wr. The second moto/generator MG2 is driven by the electric current which the first motor/generator MG1 generates and the electric current which is supplied from the battery 33 to drive the drive wheels Wl and Wr.

It is noted here that when the control portion 40 judges that the acceleration pedal 81 has been released (acceleration opening degree "Ac" is zero) or judges that the brake pedal 83 has been depressed (the brake opening degree Bk is larger than zero), a "regeneration braking operation" is executed. Under the "regeneration braking operation", the control portion 40 generally controls the actuator 50 to actuate the clutch 20 to be in disconnected state. Then the control portion 40 outputs the control signal to the second inverter 32 and the regeneration braking force is generated at the second motor/generator MG2. At this timing, the second motor/generator MG2 generates the rotation drive force in a negative direction and the current generated at the second motor/generator MG2 is charged to the battery 33. Accordingly, the regeneration braking is executed when the clutch 20 is disconnected and the vehicle kinetic energy is not wastefully consumed due to the friction rotation drive force EG. It is noted that under the battery 33 being fully charged state, the control portion 40 controls the actuator 50 to actuate the clutch 20 to be in engagement state thereby rotating the engine EG to utilize the engine friction toque (so-called engine brake) for deceleration of the vehicle.

(First touch point detection start processing)

Next, using the flowchart of Fig. 3, the first touch point detection start processing will be explained. When the vehicle is ready for running, at the step S11 and the control portion 40 judges that the vehicle is under the electric running mode and the vehicle is running only by the rotation drive torque of the second motor/generator MG2 or the vehicle is stopped (at the step S11: YES), the control portion 40 advances the program to the step S12 and when the control portion 40 judges that the vehicle is not running only by the rotation drive torque of the second motor/generator MG2 (at the step S11: NO), the control portion repeats the processing of the step S11.

At the step S12, when the control portion 40 judges that a predetermined time, which corresponds to the first defined time, or more has elapsed from the detection of the "touch point" at the previous time (including the touch point in which the detection is decided in a later explained "second touch point detection start processing") (at the step S12: YES), the control portion 40 advances the program to the step S13 and when the control portion 40 judges that the predetermined time (first defined time) has not elapsed (at the step S12: NO), the control portion 40 returns the program to the step S11.

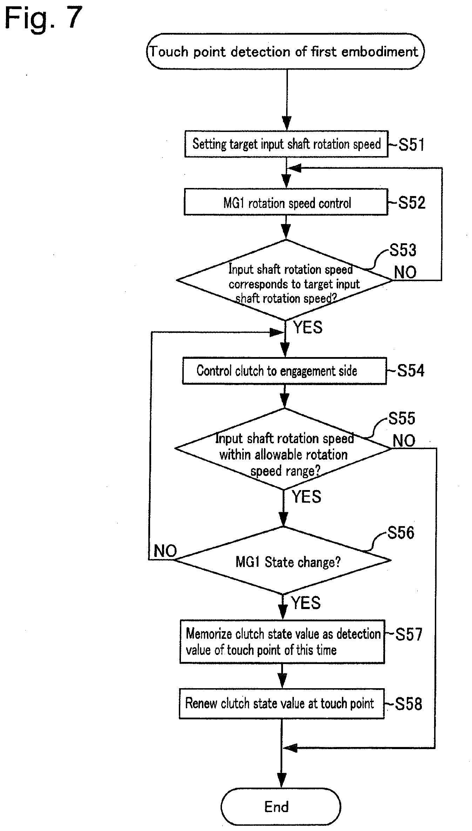

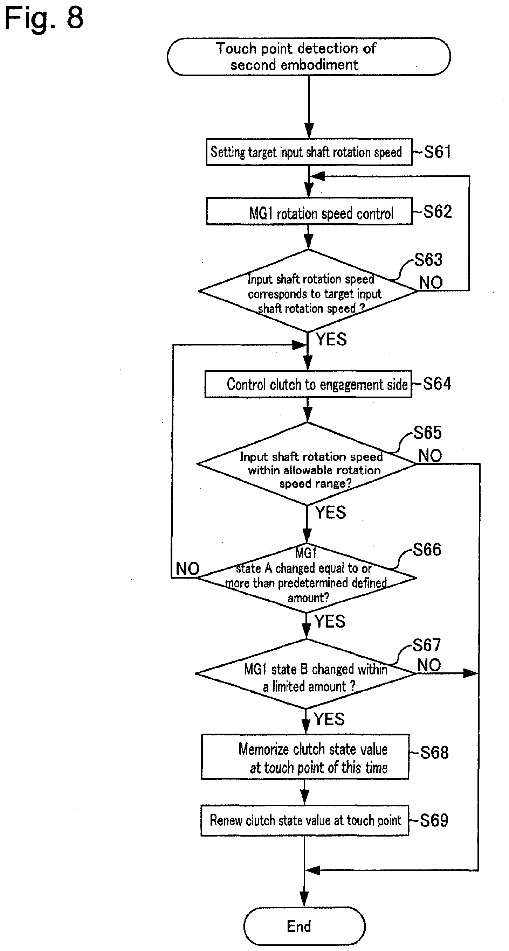

At the step S13, the control portion 40 executes the touch point detection processing regardless of the engine state being in activated state or in the stopped state and then advances the program to the step S14. It is noted that the touch point detection processing will be explained later with reference to the flowcharts illustrated in Figs. 7 and 8. At the step S14, the control portion 40 releases the clutch 20 to the stand-by position where a predetermined amount (for example 1.5mm) returned towards the release side from the touch point. Then the program returns to the step S11.

Thus, the touch point can be detected in the first touch point detection start processing even the engine EG is in a stopped state.

(Second touch point detection start processing)

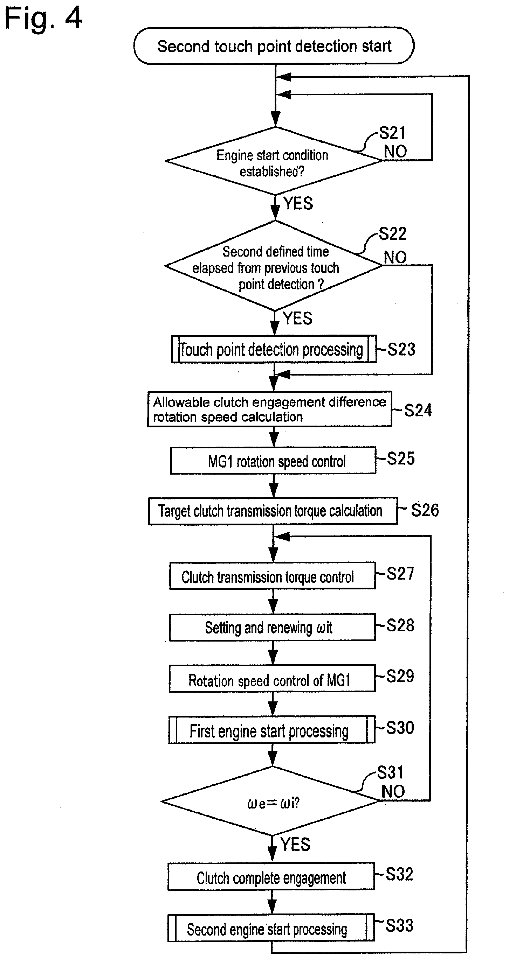

Next, the second touch point detection start processing will be explained with reference to the flowchart in Fig. 4. At the step S21, when the vehicle is ready for running and the control portion 40 judges that a start condition of the engine EG has been established (at the step S21: YES), the control portion 40 advances the program to the step S22 and when the start condition of the engine EG has not been established, the control portion 40 repeats the processing of the step S21. The control portion 40 judges that the start condition of the engine EG has been established when judged that the remaining amount of battery 33 is dropped, that the required drive force is not sufficient only by the rotation drive force of the first and the second motor/generators MG1 and MG2.

At the step S22, when the control portion 40 judges that a predetermined time, which corresponds to the second defined time, or more has elapsed from the detection of the "touch point" at the previous time (including the touch point in which the detection is decided in the "first touch point detection start processing") (at the step S22: YES), the control portion 40 advances the program to the step S23 and when the control portion 40 judges that the predetermined time (second defined time) has not elapsed (at the step S22: NO), the control portion 40 advances the program to the step S24. It is noted that the second defined time is set to be shorter than the first defined time at the step S12 in Fig. 3.

At the step S23, the touch point detection processing is executed and the program goes to the step S24. The touch point detection processing will be explained later with reference to the flowcharts in Figs. 7 and 8.

At the step S24, the control portion 40 calculates an allowable clutch difference rotation speed ($\Delta\varpi\_0max$) at engagement start based on an allowable amount of heat generation (Qtmax) at the engagement of the clutch 20, a friction torque Te of the engine EG, an inertia Ie of the engine and a target clutch synchronizing time "tst". It is noted that the allowable clutch difference rotation speed ($\Delta\varpi\_0max$) at engagement start means the allowable difference in rotation speed of the clutch 20 at the time of the engagement of the clutch 20 (difference in rotation speed between the input shaft 51 and the output shaft EG-1). When the engine EG is stopped at the time the engine EG is activated to start (engine rotation speed is zero), the allowable clutch difference rotation speed ($\Delta\varpi\_0max$) at engagement start corresponds to the rotation speed of the input shaft 51. It is noted here that hereinafter the allowable clutch difference rotation speed ($\Delta\varpi\_0max$) at engagement start may be referred to as "target input shaft rotation speed $\varpi$it_0 at the start of the engagement".

The allowable amount of heat generation (Qtmax) means the allowable total amount of the heat generated at the time of the engagement of the clutch 20. This amount is calculated based on the temperature Th in the housing detected by the temperature sensor 26. The friction torque Te of the engine EG is calculated based on oil temperature which is estimated by the water temperature te of the engine coolant detected by the water temperature sensor EG-3. The inertia "Ie" of the engine EG is a moment of inertia of the rotation member of the engine EG. The rotation member of the engine EG includes a crankshaft, a con rod, a piston, the output shaft EG-1, the flywheel 21, the clutch cover 23, the pressure plate 24 and the diaphragm spring 25. The inertia Ie of the engine is preset in advance. The target clutch synchronizing time "tst" is the target time for synchronizing the clutch 20 and is set to be the time elapsed from the start of the engagement of the clutch 20 until the synchronization between the input shaft 51 and the output shaft EG-1 is completed. This target clutch synchronizing time "tst" is set in advance considering the shocks occurred upon engagement of the clutch 20. After the processing of the step S24, the program goes to the step S25.

At the step S25, the control portion 40 controls the rotation of the first motor/generator MG1 outputting a control signal to the first inverter 31 so that the input shaft rotation speed wi agrees to the target input shaft rotation speed $\varpi$it_0 at the start of the engagement (the allowable clutch difference rotation speed ($\Delta\varpi\_0max$) at engagement start). First, the control portion 40 calculates the target rotation speed wMG1t of the first motor/generator MG1 in which the input shaft rotation speed wi agrees to the target input shaft rotation speed $\varpi$it_0 at the start of the engagement. More specifically, the control portion 40 calculates the target rotation speed wMG1t by substituting the target input shaft rotation speed $\varpi$it_0 at the start of engagement and the rotation speed $\omega$r of the ring gear 14 into the following formula (1):

$$\omega MG1t = \{(\lambda + 1) \times \omega it\_0 - \omega r\} / \lambda \ ... \ (1)$$

$\omega$MG1t: target rotation speed of the first motor/generator MG1:

$\lambda$: gear ratio of the planetary gear mechanism 10 ((the number of teeth of the sun gear 11) / (the number of teeth of the inner gear 14a)):

$\omega$it_0: target input shaft rotation speed at the start of engagement (rotation speed of the carrier 13):

$\omega$r: the rotation speed of the ring gear 14.

It is noted that since the rotation speed $\omega$r of the ring gear 14 is proportional to the vehicle speed and the rotation speed of the second motor/generator MG2, the control portion 40 calculates the rotation speed $\omega$r of the ring gear 14 based on the vehicle speed and the rotation speed of the second motor/generator MG2. It may also be directly obtained by detecting the rotation speed $\omega$r of the ring gear 14.

Next, the control portion 40 executes a PID control (feedback control) so that the rotation speed $\omega$MG1r of the first motor/generator MG1 agrees with the above calculated target rotation speed $\omega$MG1t by outputting a control signal to the first inverter 31 based on the rotation speed $\omega$MG1r of the first motor/generator MG1 detected by the rotation speed sensor MG1-1. For example, as shown in Fig. 2B with the solid line, when the first motor/generator MG1 is stopped (rotation speed is zero) (which is the state of the point 1 in Fig. 2B), when the current input shaft rotation speed wi (point 2 in Fig. 2B) is greater than the target input shaft rotation speed $\varpi$it_0 at the start of the engagement (point 3 in Fig. 2B), the control portion 40 controls the rotation speed wMG1r of the first motor/generator MG1 to be the target rotation speed wMG1t at the negative rotation side (point 4 in Fig.

2B). Thus the clutch 20 is controlled to the allowable clutch difference rotation speed ($\Delta\varpi\_0max$) at engagement start. After the processing in the step S25 finished, the program goes to the step S26.

At the step S26, the control portion 40 calculates the target clutch transmitting torque Tct which is the target transmitting torque of the clutch 20 being under engagement. More specifically, the control portion 40 calculates the target clutch transmitting torque Tct by substituting the values of friction torque Te of the engine EG, engine inertia Ie, target input shaft rotation speed $\varpi it\_0$ at the start of engagement and a target clutch synchronizing time Tst into the following formula (2).

$$Tct = Te + Ie \cdot \omega it\_0/Tst \dots (2)$$

Tct: target clutch transmitting torque:
Te: friction torque of the engine EG:
Ie: engine inertia:
$\omega it\_0$: target input shaft rotation speed at the engagement start (allowable clutch difference rotation spee at the start of the engagement):
Tst: target clutch synchronizing time.

At the step S27, the control portion 40 executes a feedback control so that the clutch transmitting torque generated at the clutch 20 agrees to the target clutch transmitting torque Tct calculated at the step S26 by outputting a control signal to the actuator 50. The control portion estimates a clutch temperature Tcrt which is the temperature of the current friction material 22a based on the temperature in the housing Th detected by the temperature sensor 26, integrated value of the heat generation amount of the friction material 22a and an integrated value of the total discharged heat amount of the friction material 22a and the clutch 20. Then the control portion 40 calculates the friction force between the friction material 22a and the flywheel 21 from the clutch temperature Tcrt, difference rotation speed between the engine rotation speed we and the input shaft rotation speed wi and the clutch pressurizing load. Then the control portion 40 executes a feedback control of the clutch transmitting torque by outputting a control signal to the actuator 50 based on the change of the friction force. The clutch pressurizing load is a load generated when the clutch disc 22 is pressurized to flywheel 21 and the control portion 40 confirms the clutch pressurizing load by a control signal outputted to the actuator 50. After the processing of the step S27, the program goes to the step S28.

At the step S28, the control portion 40 renews the target input shaft rotation speed wit under the clutch being under engagement by substituting the values of the target input shaft rotation speed $\varpi it\_0$ at the start of engagement, the target clutch synchronizing time Tst, the time "t" elapsed from the start of the engagement of the clutch 20, and current engine rotation speed $\varpi e$ into the following formula (3).

$$\omega it = -\omega it\_0 / Tst \cdot t + \omega e + \omega it\_0 \dots (3)$$

$\omega it$: target input shaft rotation speed under engagement:
$\omega it\_0$: target input shaft rotation speed $\varpi it\_0$ at the start of engagement:
Tst: target clutch synchronizing time:
t: elapsed time from the start of the engagement of the clutch:
$\omega e$: engine rotation speed.

After the processing of the step S28, the program advances to the step S29.

At the step S29, first, the control portion 40 calculates the target rotation speed wMG1t of the first motor/generator MG1 in which the rotation speed of the carrier 13 becomes the target input shaft rotation speed wit under the clutch 20 being under engagement calculated at the step S28. Then the control portion 40 executes the PID (feedback control) so that the rotation speed of the first motor/generator MG1 becomes the target rotation speed wMG1t by outputting a control signal to the first inverter 31 based on the rotation speed wMG1 r of the first motor/generator MG1 detected by the rotation speed sensor MG1-1. After the processing of the step S29, the program advances to the step S30.

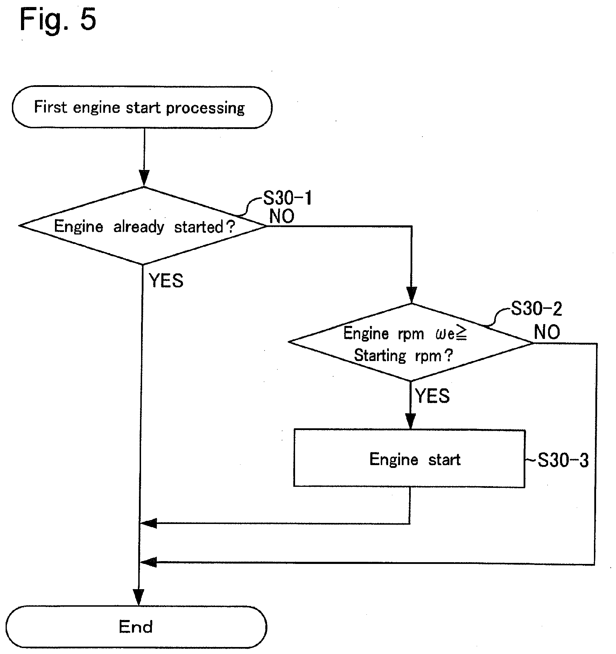

At the step S30, the control portion 40 starts the first engine start processing. This first engine start processing will be explained with reference to the flowchart in Fig. 5. When the first engine start processing is started and when the control portion 40 judges that the engine EG has started at the step S30-1 (S30-1; YES), the first engine start processing ends (processing of the step S30 in Fig. 4 ends) then the program goes to the step S31 of Fig. 4 and when the control portion 40 judges that the engine EG has not started (S30-1; NO), the program goes to the step S30-2.

At the step S30-2, when the control portion 40 judges that the engine rotation speed we is judged to be equal to or more than a starting rotation speed which is necessary to set up the engine EG for starting (S30-2; YES), the program goes to the step S30-3 and judged to be less than the necessary starting rotation speed (S30-2; NO), the first engine start processing ends (the processing of step S30 of Fig. 4) and the program goes to the step S31 of Fig. 4.

At the step S30-3, the control portion 40 injects the fuel by the fuel injection device and at the same time ignites the plugs to start the engine EG. After the processing of the step S30-3 ends, the first engine start processing ends (the processing of the step S30 in Fig. 4 ends) and the program goes to the step S31 of Fig. 4.

At the step S31, when the control portion 40 judges that the engine rotation speed $\omega e$ and the input shaft rotation speed wi agree to each other (S31; YES), the program goes to the step S32 and when judged that both rotation speeds $\omega e$ and $\omega i$ do not agree with each other (S31; NO), the program returns to the step S27. It is noted that the state that the engine rotation speed ωe and the input shaft rotation speed wi agree to each other is the state that the engine rotation speed ωe and the input shaft rotation speed wi are in synchronization with each other and the state that the clutch 20 is synchronized.

At the step S32, the control portion 40 outputs a control signal to the actuator 50 to have the clutch 20 to be completely in engagement state. Thus the output shaft EG-1 and the input shaft 51 are completely connected to proceed to the step S33.

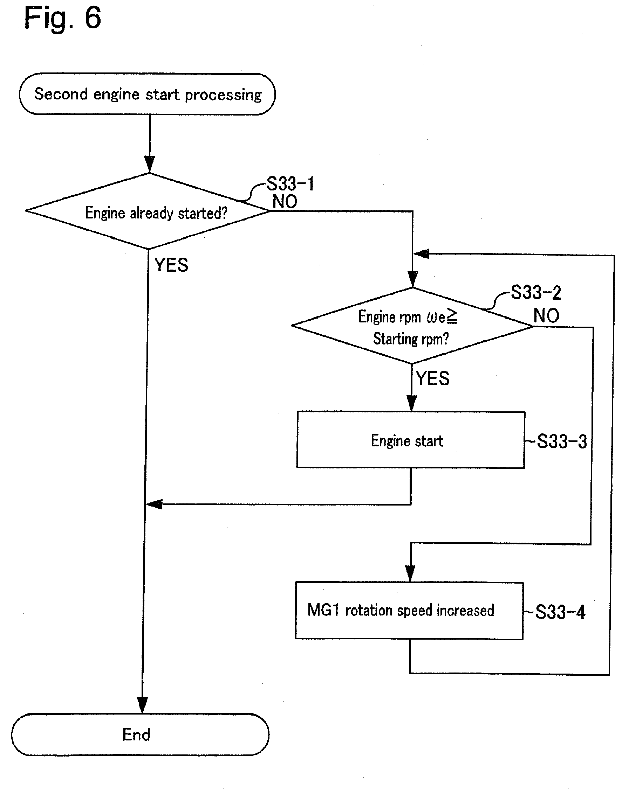

At the step S33, the control portion 40 stars the second engine start processing. This second engine starting processing will be explained with reference to the flowchart of Fig. 6. When the second engine start processing is started and when the control portion 40 judges that the engine EG has started (S33-1; YES), the second engine start processing ends (processing of the step S33 in Fig. 4 ends) and the program returns to the step S21 in Fig. 4. When the control portion 40 judges that the engine EG has not started at the step S33-1 (S74-1; NO), the program goes to the step S33-2.

At the step S33-2, when the control portion 40 judges that the engine rotation speed ωe is judged to be equal to or more than the above explained starting rotation speed (S33-2; YES), the program goes to the step S33-3 and judged to be less than the starting rotation speed (S33-2; NO), the program goes to the step S33-4.

At the step S33-4, the control portion 40 injects the fuel by the fuel injection device and at the same time ignites the plugs to start the engine EG. After the processing of the step S33-3 ends, the second engine start processing ends (the processing of the step S33 in Fig. 4 ends) and the program returns to the step S21 in Fig. 4.

At the step S33-4, the control portion 40 outputs a control signal to the first inverter 31 to increase the rotation speed of the first motor/generator MG1, thereby to increase the engine rotation speed ωe. After the processing of the step S33-4, the program returns to the step S33-2.

When the engine EG starts, the control portion 40 outputs the control signal to the engine EG to generate a desired engine torque at the engine EG and at the same time outputs the control signal to the first inverter 31 to start electricity generation at the first motor/generator MG1. Under this state, the vehicle is driven under the split running mode. It is noted that when the vehicle becomes in runnable state, both the first touch point detection start processing and the second touch point detection start processing are executed in parallel.

As explained above, under the second touch point detection start processing, it is not necessary to rotate the first motor/generator MG1 just for detecting the touch point and the touch point is detected at the time of the engine start. This can prevent extra consumption of energy merely for detecting the touch point.

(First touch Point Detection Start processing and Second Touch Point Detection Start processing)

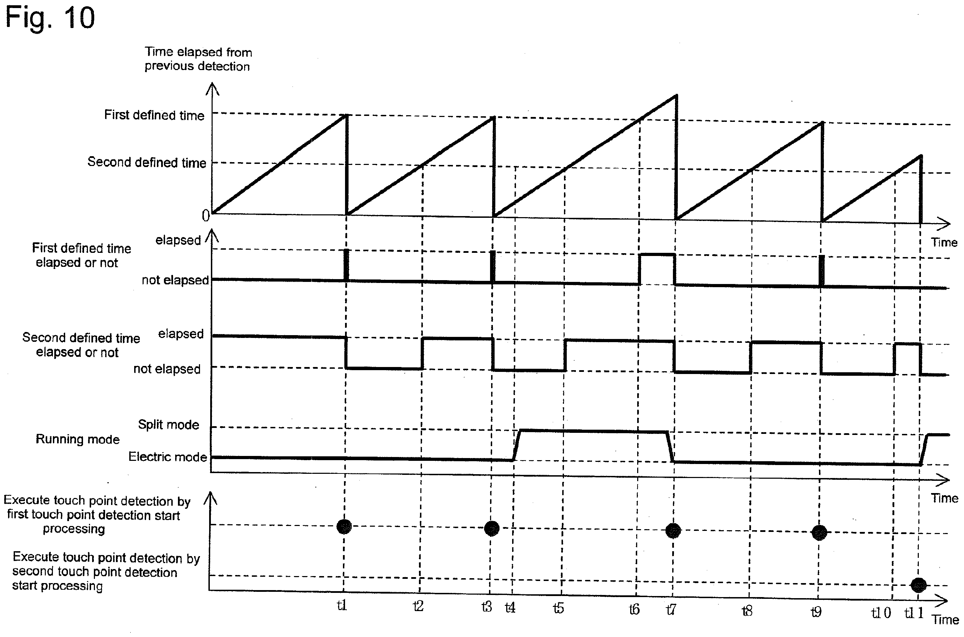

The touch point detection start processing which includes both the first and the second touch point detection start processing will be explained with reference to the time chart illustrated in Fig. 10. It is noted that the black dot indicates the execution of the touch point detection in Fig. 10. When the vehicle is running under the electric running mode or the vehicle is stopped, the judgment in the step S11 in Fig. 3 is "YES" and the first defined time elapsed (time t1 in Fig. 10) from the previous detection of the touch point, the judgment in the step S12 in Fig. 3 is judged to be "YES". Then the touch point is detected.

The touch point detection is not executed when the vehicle is running under an electric running mode or the vehicle is stopped even after the second defined time elapsed (time t2 in Fig. 10) from the previous detection of the touch point (time t1 in Fig. 10). This is because the engine start condition is not established and the judgment in the step S21 in Fig. 4 is judged to be "NO".

After the first determined time passed (time t3 in Fig. 10) from the previous detection of the touch point (time t1 in Fig. 10), the judgment is judged to be "YES" at the step S12 in Fig. 3 and the touch point is detected.

When the running mode is switched over to the split running mode, (time t4 in Fig. 10), and the second defined time has elapsed (time t5 in Fig. 10), since the engine EG has already started, the judgment in the step S21 in Fig. 4 is "NO" and accordingly, the touch point detection is not executed.

After the previous detection of the touch point (time t3 in Fig. 10), and the second defined time has elapsed (time t6 in Fig. 10), since the vehicle is running under the split running mode or stopped, the judgment in the step S11 in Fig. 3 is "NO" and accordingly, the touch point detection is not executed.

When the running mode is switched over to the electric running mode, (time t7 in Fig. 10), the judgment at the step S11 in Fig. 3 is "YES" and the first defined time has elapsed from the previous detection of the touch point (time t3 in Fig. 10), the judgment in the step S12 in Fig. 3 is "YES" and accordingly, the touch point is detected.

The touch point detection is not executed when the vehicle is running under an electric running mode or the vehicle is stopped even after the second defined time elapsed (time t8 in Fig. 10) from the previous detection of the touch point (time t7 in Fig. 10). This is because the engine start condition is not established and the judgment in the step S21 in Fig. 4 is "NO" judgment.

After the determined first defied time passed (time t9 in Fig. 10) from the previous detection of the touch point (time t7 in Fig. 10), the judgment is "YES" at the step S11 and is "YES" at the step S12 in Fig. 3. Thus, the touch point is detected.

The touch point detection is not executed when the vehicle is running under an electric running mode or the vehicle is stopped even after the second defined time elapsed (time t10 in Fig. 10) from the previous detection of the touch point (time t9 in Fig. 10). This is because the engine start condition is not established and the judgment in the step S21 in Fig. 4 is judged to be "NO".

When the running mode is switched over to the split running mode, (time t11 in Fig. 10), and the engine start condition is established, the judgment in the step S21 in Fig. 4 is "YES" and the second defined time has already elapsed from the previous detection of the touch point (time t9 in Fig. 10), the judgment in the step S22 in Fig. 4 is "YES" and accordingly, the touch point is detected.

(Touch Point Detection Processing according to the First Embodiment)

Next, the touch point detection processing according to the first embodiment will be explained with reference to the flowchart in Fig. 7. At the step S13 in Fig. 3 and the step S23 in Fig. 4, when the touch point detection starts, at the step S51, the control portion 40 sets the target input shaft rotation speed $\varpi i2$. This target input shaft rotation speed $\varpi i2$ is the "allowable rotation speed" the rotation speed of which is the input shaft 51 rotation speed that can detect the touch point with high precision. This allowable rotation speed is for example, set within the range between about 400rpm and 2000rpm. According to this embodiment, the target input shaft rotation speed $\varpi i2$ is set to be the average rotation speed of the allowable rotation speed (for example, 1200rpm). After the setting process at the step S51 ends, the program goes to the step S52.

At the step S52, similar to the manner processed at the step S25 in Fig. 4, the control portion 40 controls the rotation speed of the first motor/generator MG1 so that the rotation speed of the first motor/generator MG1 becomes the target input shaft rotation speed $\varpi i2$ as set at the step S51. The rotation speed of the input shaft 51 varies according to the change of the vehicle speed V. In other words, as shown in Fig. 2, the rotation speed of the input shaft 51 is associated with the rotation speed of the second motor/generator MG2 which has a proportional relationship with the vehicle speed V. Therefore, the rotation speed of the input shaft 51 varies according to the change of the vehicle speed V. At the step 52, the rotation speed of the input shaft 51 is controlled to be the input shaft target rotation speed $\omega i2$. After the step S52 processing is finished, the program goes to the step S53.

At the step S53, when the control portion 40 judges that the rotation speed of the input shaft 51 corresponds to the target input shaft rotation speed $\omega i2$ set at the step S51 (S53: YES), the program goes to the step S54 and when judged that the rotation speed of the input shaft 51 does not correspond to the target input shaft rotation speed $\omega i2$ (S53: NO), the program returns to the strep S52.

At the step S54, the control portion 40 controls the clutch 20 in an engagement side with a predetermined amount by outputting the control signal to the actuator 50. The control of the clutch to the engagement side with a predetermined amount means that under the clutch disc 22 and the flywheel 21 being separated, the clutch disc 22 is gradually moved towards the flywheel 21 side within an amount that the clutch 20 is not completely engaged. After the processing at the step S54 ends, the program goes to the step S55.

At the step S55, when the control portion 40 judges that the rotation speed of the input shaft 51 is within the allowable rotation speed with the predetermined allowance of the rotation speed (S55: YES), the program goes to the step S56 and judges that the rotation speed of the input shaft 51 is not within the allowable rotation speed (S55: NO) the touch point detection processing of the first embodiment ends. It is noted that at the step S55, the reason why the control portion 40 judges whether or not the rotation seed of the input shaft 51 is within the allowable rotation speed is that after the processing of the step S53, the vehicle speed V may be changed to thereby change the rotation speed of the input shaft 51.

At the step S56, when the control portion 40 judges that the state of the first motor/generator MG1 is changed (S56: YES), the program goes to the step S57 and when the control portion 40 judges that no state change at the first motor/generator MG1 occurs (S56; NO), the program returns to the step S54. It is noted that the change of the state of the first motor/generator MG1 is the change of the rotation speed of the first motor/generator MG1 or the torque change of the rotation drive force generated at the first motor/generator MG1. In other words, such state change of the first motor/generator MG1 is caused by the influence of the engine friction torque Te and engine inertia le on the first rotor Ro1 of the first motor/generator MG1 due to the contact of the clutch disc 22 with the flywheel 21. Accordingly, by detecting the state change of the first motor/generator M1, the touch point where the clutch disc 22 is brought into contact with the flywheel 21 can be detected. It is noted that the rotation speed change of the first motor/generator MG1 is detected by the rotation speed sensor MG1-1. The torque change of the rotation drive force generated at the first motor/generator MG1 is detected by the current value change of the drive current (including the change of the duty ratio of the current) to be energized to the first motor/generator MG1 using the first inverter 31. It is further noted that since the control portion 40 controls the rotation speed of the first motor/generator MG1 to be the target rotation speed, when the clutch disc 22 is brought into contact with the flywheel 21, the load on the first motor/generator MG1 changes and accordingly eventually changes the current value of the drive current to be energized to the first motor/generator MG1.

At the step S57, the control portion 40 memorizes the clutch 20 state value as a detected value of current (this time) "touch point" in the memory portion. The clutch 20 state value includes for example, stroke amount of the actuator 50, current value and voltage value of the drive current to be energized to the actuator 50 and the clutch pressurizing load as explained above. After the step S57, the program goes to the step S58.

At the step S58, the control portion 40 renews and memorizes the clutch 20 state value at the touch point in the memory portion. According to this embodiment, the clutch 20 state value up to the previous time and the clutch state value at the touch point detected at this time are weight averaged (weighted average value) and the clutch 20 state value detected at the touch point is renewed by weighted averaging. For example the weighted averaging is made by assuming that the state value of the clutch 20 up to the previous time is 8, and that the state value at the touch point detected at this time is 2. After the processing of the step S58, the touch point detection processing according to the first embodiment ends.

(Touch Point Detection Processing according to the Second Embodiment)

Next, the touch point detection processing according to the second embodiment will be explained with reference to the flowchart in Fig. 8. At the step S13 in Fig. 3 and the step S23 in Fig. 4, when the touch point detection starts, at the step S61, the control portion 40 sets the target input shaft rotation speed $\varpi$i2. The program then goes to the step S62. The processing in this step S61 is the same with the processing in the step S51. Further, the processing in the steps S62, S63 and S64 in Fig. 8 are the same as those in the steps S52, S53 and S54 and the explanation thereof will be omitted. After the setting at the step S64 ends, the program goes to the step S65.

At the step S65, when the control portion 40 judges that the rotation speed of the input shaft 51 is within the allowable rotation speed with the predetermined allowance of the rotation speed range (S65: YES), the program goes to the step S66 and judges that the rotation speed of the input shaft 51 is not within the allowable rotation speed (S65: NO), the touch point detection processing of the second embodiment ends. It is noted that at the step S65, the reason why the control portion 40 judges whether or not the rotation seed of the input shaft 51 is within the allowable rotation speed is that after the processing of the step S63, the vehicle speed V may be changed to thereby change the rotation speed of the input shaft 51.

At the step S66, when the control portion 40 judges that the state of the first motor/generator MG1 is changed to an amount A which is equal to or more than a predetermined value (S66: YES), the program goes to the step S67 and when the control portion 40 judges that the amount A of the state change at the first motor/generator MG1 is less than the predetermined value (S66 NO), the program returns to the step S64. It is noted that the amount A of the change of the state of the first motor/generator MG1 corresponds to the change of the rotation speed of the first motor/generator MG1 or the torque change of the rotation drive force generated at the first motor/generator MG1.

At the step S67, when the control portion 40 judges that the state amount B of the first motor/generator MG1 is within the predetermined limited amount (S67: YES), the program goes to the step S68 and when the state amount B is judged to be out of the predetermined limited amount (S67: NO), the touch point detection processing according to the second embodiment ends. It is noted that the state amount B of the first motor/generator MG1 includes the torque change of the rotation drive force generated at the first motor/generator MG1 and the change of the rotation speed of the first motor/generator MG1 but does not include the state amount A of the first motor/generator MG1 as explained above.

At the step S68, the control portion 40 memorizes the state value of the clutch 20 at the touch point detected this time as a detection value in the memory portion. For example, at the step S66, the control portion 40 memorizes the state value of the clutch 20 upon the change of the state amount A of the first motor/generator MG1 as the state value of the clutch 20 at the touch point detected this time. Or, the control portion 40 memorizes the calculation value of the state value of the clutch 20 at the current touch point subtracted from the predetermined change amount of the state amount A of the first motor/generator MG1 at the step S66 as the state value of the cultch 20 at the touch point detected this time. After the processing at the step S68, the program goes to the step S69.

At the step S69, the control portion 40 renews and memorizes the state value of the clutch 20 at the touch point in the memory portion by executing the similar processing as in the step S58 in Fig. 7. After the step S69, the touch point detection processing according to the second embodiment ends.

(Stand-by Position Change Processing)

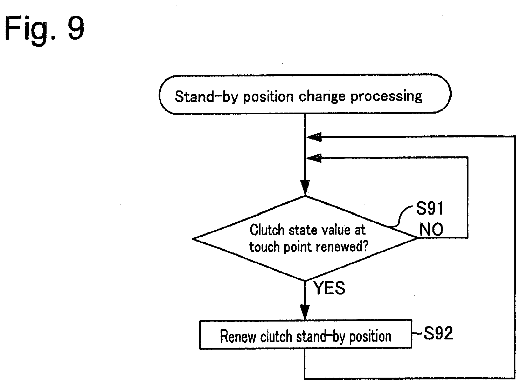

Next, the stand-by position change processing will be explained with reference to the flowchart in Fig. 9. When the vehicle is in a runnable state, at the step S91 and when the control portion 40 judges that the state value of the clutch 20 at the touch point has been renewed (S91: YES) (processing at the step S58 in Fig. 7 and the processing at the step S69 in Fig. 8), the program goes to the step S92 and when the control portion 40 judges that the state value of the clutch 20 at the touch point has not been renewed (S91: NO), the processing of the step S91 is repeated.

At the step S92, the control portion 40 defines the clutch 20 position returned towards the clutch releasing side by a predetermined amount (for example, 1.5mm) from the renewed touch point as a stand-by position renews and memorizes the state value of the clutch 20 at the stand-by position. Then the program returns to the step S91.

It is noted that when the clutch 20 is in a disconnected state, the state value of the clutch 20 is changed to a state value at the stand-by position to have the clutch 20 to be positioned at the renewed stand-by position.

(Advantageous effects of the embodiments)

As apparent from the explanation above, the control portion 40 (touch point detecting means) detects state of clutch 20 when the state change is detected at the first motor/generator MG1 (the judgment of "YES" at the step S56 in Fig. 7 and the step S66 in Fig. 8) by the rotation speed sensor MG1-1 and the first inverter 31 (state change detecting means) upon engagement of the clutch 20 which has been in a disconnected state, as the "touch point" for starting the engagement of the clutch 20 (steps S57 and S68 in Figs. 7 and 8, respectively). When the clutch 20 is engaged from the disconnected state, friction torque Te from the engine EG and the engine inertia "Ie" influence on the first motor/generator MG1 thereby to change the rotation speed and the torque thereof. Accordingly, by detecting such changes of the rotation speed and the torque of the first motor/generator MG1, the touch point can be detected where the point the clutch 20 starts engagement from the disconnected state. Further, the touch point is also detected based on the change of the state of the first motor/generator MG1. Therefore, the vibration would not be generated when the engine EG is stopped and even the first motor/generator MG1 is rotated. Accordingly, the touch point detection would not be influenced by the engine EG vibration and the detection accuracy is improved so that a highly accurate touch point can be detected. In other words, since the clutch 20 is not influenced by the vibration, the gap between the clutch disc 22 and the flywheel 21 is unchanged to improve the accuracy of detection of the touch point.

Further, at the step S51 in Fig. 7 or at the step S61 in Fig. 8, the control portion 40 (touch point detecting means) sets the target input shaft rotation speed ωi2 which corresponds to the rotation speed of the input shaft 51 by which the touch point can be detected with a high accuracy. Further, at the step S52 in Fig. 7 and the step S62 in Fig. 8, the control portion 40 controls the rotation speed of the first motor/generator MG1 so that the rotation speed of the first motor/generator MG1 agrees with the target input shaft rotation speed ωi2 and detects the touch point at the step S57 in Fig. 7 and the step S68 in Fig. 8. Accordingly, the rotation speed of the input shaft 51 can be appropriately controlled to be a rotation speed by which a high accurate detection of the touch point can be performed. Still further, the rotation speed of the input shaft 51 is variable depending on whether the rotation power is transmitted from the engine EG or not, whether the electricity generation is performed at the first motor/generator MG1 or not, whether the vehicle is stopped or not and depending on the change of the vehicle speed. However, according to the embodiments, since the rotation speed of the input shaft 51 is controlled to be the target input shaft rotation speed ωi2, the touch point detection can be performed regardless of the vehicle state.

Further, as shown in Fig. 1, when the three elements of the planetary gear mechanism 10 are arranged in order with the distance corresponding to the gear ratios in the collinear charts which can represents the relative rotation speed ratios in straight lines as shown in Figs. 2A and 2B. Assuming that the order is from first element, second element and third element corresponding to the gear ratios, the first element, which is the sun gear 11, is rotatably connected to the first motor/generator MG1, the second element, which is the carrier 13, is connected to the input shaft 51 and the third element, which is a ring gear 14, is rotatably connected to the drive wheels WI and Wr and the second motor/generator MG2. Accordingly, at the step S51 in Fig. 7 and the step S61 in Fig. 8, the rotation speed of the input shaft 51 can be freely changed to any desired or appropriate rotation speed by rotationally controlling the first motor/generator MG1. Thus the accurate detection of the touch point can be performed. Further, even the engine is installed, by rotating the first motor/generator MG1, under the vehicle being running under any mode, or the vehicle being in stopped state, by rotating the input shaft 51 the touch point can be detected. Further, under the engine EG being in rotation, when the vehicle is running with any vehicle speed or the vehicle is stopped by rotating the first motor/generator MG1 to have a difference rotation speed between the input shaft 51 and the output shaft EG-1 which is suitable for detecting the touch point. Thus the touch point can be detected.

Further, at the steps S55 in Fig. 7 and S65 in Fig. 8, the control portion 40 detects the touch point as long as the input shaft 51 rotation speed is within the allowable rotation speed with a predetermined limitation range for the rotation speed. In other words, the rotation speed of the input shaft is variable depending on the variation of the vehicle speed and if the rotation speed of the input shaft 51 is slower than the above allowable rotation speed (judgment "NO" at the step S55 in Fig. 7 and the step S63 in Fig. 8), the difference rotation speed between the input 51 and output shaft EG-1 is small and the state change of the first motor/generator MG1 is poor or scarce. Under such scarce state, it is difficult to detect the touch point based on the state change of the first motor/generator MG1 and is difficult to detect the touch point accurately. Therefore, under such state, the touch point detection is not performed according to the embodiments. On the other and, when the rotation speed of the input shaft 51 is faster than the above allowable rotation speed, a blurring of center of the clutch member which is connected to the input shaft may be generated and an erroneous touch point which position is deviated from a right place of touch point to be detected towards the position of clutch being released may be detected as the touch point. However, according to the embodiments, if the rotation speed of the input shaft 51 is faster than the allowable rotation speed (judgment "NO" at the step S55 in Fig. 7 and the step S63 in Fig. 8), the touch point detection is not performed so that the worsening of accuracy of the detection can be avoided. Thus the accuracy of detection of the touch point can be improved.

Further, at the steps S56 in Fig. 7 and S66 in Fig. 8, the control portion 40 detects the change of the rotation speed of the first motor/generator MG1 as the state change of the first motor/generator MG1. Therefore, when the clutch 20 which has been in the disconnected state starts engagement, the friction torque Te of the engine EG and the engine inertia Ie influence on the first motor/generator MG1 to vary the rotation speed thereof and accordingly, a detection of the touch point can be surely performed.

At the steps S56 in Fig. 7 and S66 in Fig. 8, the control portion 40 detects the torque change of the rotation drive force generated by the first motor/generator MG1 as the state change of the first motor/generator MG1. Accordingly, when the clutch 20 which has been in the disconnected state starts engagement, the friction torque Te of the engine EG and the engine inertia Ie influence on the first motor/generator MG1 to vary the torque thereof and accordingly, a detection of the touch point can be surely performed.

At the step S66 in Fig. 8, the control portion 40 detects the touch point based on the change of the rotation speed of the first motor/generator MG1 and at the same time detects an erroneous detection of the detected touch point based on the torque change of the first motor/generator MG1. Accordingly, even the rotation speed of the first motor/generator MG1 changes (S66; YES in Fig. 8), unless the torque of the first motor/generator MG1 corresponds to the change of the rotation speed (S67; NO in Fig. 8), the detection is judged to be erroneous touch point detection. In other words, the rotation speed of the first motor/generator MG1 may be changed due to a disturbance such as voltage change or electric noise. However, if the torque change of the first motor/generator MG1 does not correspond to the change of the rotation speed, such change is not caused by the engagement of the clutch 20 and therefore, the detection is judged to be an erroneous touch point detection. Thus, according to the embodiments, compared to the detection by only the change of the rotation speed of the first motor/generator MG1, the erroneous detection caused by the turbulence can be excluded to improve the accuracy of detection of the touch point.

Or, at the step S66 in Fig. 8, the control portion 40 detects the touch point based on the torque change of the first motor/generator MG1 and at the same time detects an erroneous detection of the touch point detected based on the rotation speed change of the first motor/generator MG1. Accordingly, even the torque of the first motor/generator MG1 changes, unless the rotation speed change of the first motor/generator MG1 corresponds to the change of the torque, the detection is judged to be erroneous touch point detection. In other words, the torque of the first motor/generator MG1 may be changed by a turbulence such as when a braking force is applied to the vehicle or the changes of the vehicle running state (such as running on a sloped road) due to disturbance such as voltage change or electric noise. However, if the rotation speed change of the first motor/generator MG1 does not correspond to the change of the torque, such change is not caused by the start of the engagement of the clutch 20 and therefore, the detection is judged to be erroneous touch point detection. Thus, according to the embodiments, compared to the detection by only the torque change of the first motor/generator MG1, the erroneous detection caused by the turbulence can be excluded to improve the accuracy of detection of the touch point.

Further, at the step S54 in Fig 7 and the step S64 in Fig. 8, the control portion 40 gradually engage the clutch 20 which has been in the disconnected state thereby change the state of the first motor/generator MG1. Thus, the touch point is detected and after the detection of the touch point, at the step S14 in Fig. 3, the clutch 20 is released. Accordingly, when the clutch 20 is in the disconnected state, in other words, when the vehicle is running under only the rotation drive force from the second motor/generator MG2 or the vehicle is stopped (S11; YES in Fig. 3), the touch point can be detected at any random timing.

Further, the control portion 40 detects the touch point by detecting the change of the state of the first motor/generator MG1 at the step S56 in Fig. 7 and the step S66 in Fig. 8, when the clutch 20 which has been in the disconnected state starts engagement in order to start the engine EG (S21: YES in Fig. 4). Therefore, the touch point is detected when the clutch 20 which has been in the disconnected state starts engagement for starting the engine EG. Thus, it is not necessary to engage the clutch by driving the actuator 50 only for the purpose of detection of the touch point. This can prevent an extra energy consumption.

Further, when the control portion 40 judges that a predetermined first defined time has passed from the time of detection of the previous touch point (including a touch point which has been decided to be detected at the later described second touch point detection start processing), at the first touch point detection start processing under the clutch 20 being in a disconnected state at the step S12; "YES", the touch point is detected at the process in the step S56 in Fig. 7 and the step S66 in Fig. 8 by gradually engaging the clutch 20 which has been in the disconnected state. In addition thereto, when the control portion 40 judges that a predetermined second defined time has passed from the time of detection of the previous touch point (including the touch point which has been decided to be detected at the first touch point detection start processing), at the second touch point detection start processing upon the clutch 20, which has been in the disconnected state, being engaged (at the step S22; "YES"), the touch point is detected at the process in the step S56 in Fig. 7 and the step S66 in Fig. 8 by detecting the change state of the first motor/generator MG1. The second defined time is set to be shorter than the first defined time. During the split running mode, the clutch 20 is in the engagement state and the frequency of detecting the touch point is limited. However, since the second defined time is set to be shorter than the first defined time, the frequency of detecting the touch point upon changing to the split running mode becomes increased thereby to be able to detect the touch point as close to the actual operation. Further, since the first defined time is set to be longer than the second defined time, frequent starting decisions of touch point detection can be refrained at the first touch point detection start processing in Fig. 3.

Further, by properly setting the first defined time and the second defined time, change of touch point due to the temperature change of the clutch 20 under the vehicle being running can be properly responded to adjust the deviation of the touch point during the vehicle being running.

As shown in the steps S58 and S69 in Figs. 7 and 8, the clutch 20 state value up to the previous time and the clutch state value at the touch point detected at this time are weight-averaged (weighted average value) and the clutch 20 state value detected at the touch point is renewed by weighted averaging. Accordingly, even the touch point is enormously detected, since the clutch 20 state value up to the previous time is also considered for the renewal of the clutch state value at the touch point, negative influence by such enormous detection can be minimized.

(Other Embodiments)

As explained above, at the second touch point detection start processing, when the engine EG starting condition is established (S21: YES), if the control portion 40 judges that the second defined time has passed since the previous touch point detection (S22: YES), decision is made to execute detection of the touch point at the step S23. However, as another embodiment, not only upon the engine starting timing, but also when the control portion 40 judges that the second defined time has passed from the previous touch point detection upon the engagement of the clutch 20, the touch point is detected. The state that the clutch 20 which is in a disconnected state initiates the clutch engagement operation may include the case that it is necessary for the vehicle being driven by the rotation drive force of the first and the second motor/generators MG1 and MG2 when the required driving force is insufficient by only the rotation drive force by the second motor/generator MG2 during the vehicle being running under the electric running mode and the case that the engine friction torque is utilized to decelerate the vehicle while the regeneration braking is being performed by the second motor/generator MG2.

According to the embodiment explained above, when the control portion 40 judges that the predetermined second defined time has passed since the previous touch point detection at the second touch point detection start processing at the step S22 (S22: YES), the touch point detection is executed at the step S23. However, when the control portion 40 judges that the engine start condition is established at the step S21 (S21: YES), (the second defined time is set to be zero) it may be programmed that the touch point is executed at any time at the step S23.

It may be programmed that the previous time detected touch point at the first touch point detection start processing corresponds to the touch point detected previously at the first touch point detection start processing and vice versa, the previous time detected touch point at the second touch point detection start processing corresponds to the touch point detected previously at the second touch point detection start processing.

According to the embodiment as explained above, in the steps S58 and S69 in Figs. 7 and 8, the clutch 20 state value up to the previous time and the clutch state value at the touch point detected at this time are weight averaged (weighted average value) and the clutch 20 state value detected at the touch point is renewed by weighted averaging. However, it may be possible to program that the control portion 40 merely renews the state value of the clutch 20 at the touch point of this time.

According to the embodiment explained above, the control portion calculates the input shaft rotation speed $\varpi i$ which corresponds to the rotation speed of the input shaft 51 based on the rotation speed of the first motor/generator MG1 detected by the rotation speed sensor MG1-1, the rotation speed $\varpi MG2r$ of the second motor/generator MG2 (calculated from the vehicle speed V) and the gear ratio between the sun gear 11 and the carrier 13. However, by providing an input shaft rotation speed sensor which detects the rotation speed of the input shaft 51 in the vicinity of the input shaft 51 to directly detect the input shaft rotation speed $\varpi i$ .

According to the embodiment explained above, an electric type actuator is used for the actuator 50 and the control portion 40 detects the stroke amount of the actuator 50, a current value and a voltage value of the drive current energized to the actuator and a clutch pressurizing load, as the state value of the clutch 20 at the touch point and memorizes the values in the memory portion. However, the type of the actuator 50 may be a hydraulically operated type or air pressure type. In such case, the control portion 40 detects the hydraulic pressure and air pressure of the actuator 50 and the clutch pressurizing load as the state value of the clutch 20 at the touch point and memorizes the values in the memory portion.

According to the embodiment as explained above, the three elements of the planetary gear mechanism 10 are arranged in order with the distance corresponding to the gear ratios in the collinear charts which can represents the relative rotation speed ratios with straight lines as shown in Fig. 2, the order being first element, second element and third element, the first element, which is the sun gear 11, is rotatably connected to the first motor/generator MG1, the second element, which is the carrier 13, is connected to the input shaft 51 and the third element, which is a ring gear 14, is rotatably connected to the drive wheels WI and Wr and the second motor/generator MG2. However, it may be arranged that the first element is the ring gear 14, the second element is the carrier 13 and the third element is the sub gear 11 and the first element which is the ring gear 14 is rotatably connected to the first motor/generator MG1, the second element which is the carrier 13 is connected to the input shaft 51 and the third element which is the sub gear 11 is rotatably connected to the drive wheels WI and Wr and the second motor/generator MG2.

According to the embodiment explained above, the ring gear 14 of the planetary gear mechanism 10 is provided with an inner gear 14a at the inner peripheral side thereof. However, instead of providing the inner gear 14a, an outer gear may be provided at the outer peripheral side so that the planetary gear rotatably supported on the carrier 13 is engaged with the outer gear and the sun gear 11.

According to the embodiment as explained above, the first touch point detection start processing shown in Fig. 3 and the second touch point detection start processing shown in Fig. 4 are both executed. However, it may be provided that only one of the first touch point detection start processing and the second touch point detection start processing may be provided for executing only one touch point detection start processing.

[Reference Numerals and Symbols]

In the drawings:

10: planetary gear mechanism;
11: sun gear (first element);
13: carrier (second element);
14: ring gear (third element);
20: clutch;
31: first inverter (state change detecting means);
40; control portion (state change detecting means, touch point detecting means):
50: actuator; 51: input shaft;
100: hybrid drive device
EG: engine, EG-1: output shaft
MG-1: first motor/generator (motor/generator)

MG1-1; rotation speed sensor (state change detecting means)
WI, Wr: drive wheels
Qtmax; allowable clutch amount of heat generation;
"t"; elapsed time from the clutch start engagement
Tst: target clutch synchronizing time
$\varpi i$ : input shat rotation speed
$\varpi it\_0$: target input shaft rotation speed at the start of engagement
$\varpi it$: target input shaft rotation speed when the clutch is under engagement
$\varpi e$ : engine rotation speed (rpm)
$\triangle \varpi\_0max$; allowable difference rotation speed at the start of engagement;
$\varpi MG1t$: target rotation speed of the first motor/generator
$\varpi MG1r$: rotation speed of the first motor/generator
Tct: target clutch transmitting torque.

**Claims**

1. A hybrid drive device (100) comprising:

an engine (EG) which outputs a rotation drive force to an output shaft;
an input shaft (51) which is rotated in association with a rotation of a drive wheel;
a clutch (20) disposed between the output shaft and the input shaft for connecting or disconnecting the output shaft and the input shaft;
a motor/generator (MG1, MG2) which is rotated in association with a rotation of the input shaft, **characterized by**
a state change detecting means (31, 40, MG1-1) for detecting a state change of the motor/generator; and
a touch point detecting means (40) for detecting a clutch state at the time the state change of the motor/generator is detected by the state change detecting means upon engagement of the clutch which is in a disconnected state, as a touch point where the clutch starts engagement, wherein the state change detecting means (31, 40, MG1-1) detects the change of the rotation speed of the motor/generator and the change of the torque of the rotation drive force generated by the motor/generator, and
the touch point detecting means detects the touch point based on the change of the rotation speed of the motor/generator and at the same time detects an erroneous detection of the detected touch point by the change of the torque of the motor/generator, or the touch point detecting means detects the touch point based on the change of the torque of the motor/generator and at the same time detects an erroneous detection of the detected touch point based on the change of the rotation speed of the motor/generator.

2. The hybrid drive device according to claim 1, wherein the touch point detecting means detects the touch point by setting a rotation speed of the input shaft to be a target input shaft rotation speed ($\overline{\omega}$it) by controlling a rotation of the motor/generator.

3. The hybrid drive device according to claim 1 or claim 2, wherein a planetary gear mechanism (10) is provided which includes a first element (11), a second element (13) and a third element (14) arranged in order with a distance corresponding to a gear ratio on a collinear chart which represents relative rotation speed ratio with a straight line, wherein
one of the first and the third elements is connected to the motor/generator with rotation;
the other of the first and the third elements is connected to the drive wheel with rotation; and
the second element is connected to the input shaft in rotation

4. The hybrid drive device according to any one of claims 1 through 3, wherein the touch point detecting means (40) detects the touch point only when the rotation speed of the input shaft is within an allowable rotation speed having a predetermined allowable rotation speed range.

5. The hybrid drive device according to any one of claims 1 through 4, wherein the state change detecting means (31, 40, MG1-1) detects a change of rotation speed of the motor/generator as a state change of the motor/generator.

6. The hybrid drive device according to any one of claims 1 through 4, wherein the state change detecting means (31, 40, MG1-1) detects a torque change of a rotation drive force generated by the motor/generator as a state change of the motor/generator.

7. The hybrid drive device according to any one of claims 1 through 6, wherein the touch point detecting means (40) executes a first touch point detection start processing (S11 - S14) by detecting the touch point by changing the state of the motor/generator by gradually engaging the clutch which has been in the disconnected state and after the detection of the touch point, releases the engagement of the clutch.

8. The hybrid drive device according to any one of claims 1 through 6, wherein the touch point detecting means (40) executes a second touch point detection start processing (S21 - S33) by detecting the touch point by detecting the state of the motor/generator upon engagement of the clutch which has been in the disconnected state under the engine being stopped.

9. The hybrid drive device according to claim 7 or 8, wherein in the first touch point detection start processing (S11 - S14), the touch point detecting means detects the touch point by changing the state of the motor/generator by gradually engaging the clutch which has been in the disconnected state when the touch point detecting means judges that a predetermined first defined time or more elapsed from a previous detection of the touch point in the first touch point detection start processing or in a second touch point detection start processing ((S21 - S33) and after the detection of the touch point, releases the engagement of the clutch and in the second touch point detection processing, the touch point detecting means detects the touch point by changing the state of the motor/generator upon engagement of the clutch which has been in the disconnected state when the touch point detecting means judges that a predetermined second defined time or more elapsed from a previous detection of the touch point in the first touch point detection start processing or in the second touch point detection start processing, wherein the predetermined second defined time is set to be shorter than the predetermined first defined time.

**Patentansprüche**

1. Hybridantriebsvorrichtung (100) mit:

einer Brennkraftmaschine (EG), die eine Drehantriebskraft zu einer Ausgangswelle ausgibt;
einer Eingangswelle (51), die in Verbindung mit einer Drehung eines Antriebsrads gedreht wird;
einer Kupplung (20), die zum Verbinden oder Trennen der Ausgangswelle und der Eingangswelle zwischen der Ausgangswelle und der Eingangswelle angeordnet ist;
einem Motor/Generator (MG1, MG2), der in Verbindung mit einer Drehung der Eingangswelle gedreht wird,
**gekennzeichnet durch**
ein Zustandsänderungsdetektionsmittel (31, 40, MG1-1) zum Detektieren einer Zustandsänderung des Motors/Generators; und
ein Kontaktpunktdetektionsmittel (40) zum Detektieren eines Kupplungszustands zum Zeitpunkt der Detektion der Zustandsänderung des Motors/Generators durch das Zustandsänderungsdetektionsmittel bei einem Eingriff der Kupplung, die in einem getrennten Zustand ist, als einen Kontaktpunkt, an dem die Kupplung in Eingriff kommt, bei der
das Zustandsänderungsdetektionsmittel (31, 40, MG1-1) die Änderung der Drehzahl des Motors/Generators und die Änderung des Drehmoments der Drehantriebskraft, die durch den Motor/Generator erzeugt wird, detektiert und

das Kontaktpunktdetektionsmittel den Kontaktpunkt basierend auf der Änderung der Drehzahl des Motors/Generators detektiert und zur selben Zeit eine fehlerhafte Detektion des detektierten Kontaktpunkts durch die Änderung des Drehmoments des Motors/Generators detektiert, oder das Kontaktpunktdetektionsmittel den Kontaktpunkt basierend auf der Änderung des Drehmoments des Motors/Generators detektiert und zur selben Zeit eine fehlerhafte Detektion des detektierten Kontaktpunkts basierend auf der Änderung der Drehzahl des Motors/Generators detektiert.

2. Hybridantriebsvorrichtung nach Anspruch 1, bei der das Kontaktpunktdetektionsmittel den Kontaktpunkt durch Einstellen einer Drehzahl der Eingangswelle auf eine Zieleingangswellendrehzahl ($\omega$it) durch Steuern einer Drehung des Motors/Generators detektiert.

3. Hybridantriebsvorrichtung nach Anspruch 1 oder Anspruch 2, bei der ein Planetengetriebemechanismus (10) vorgesehen ist, der ein erstes Element (11), ein zweites Element (13) und ein drittes Element (14) aufweist, die der Reihe nach mit einem Abstand, der einem Übersetzungsverhältnis entspricht, auf einem kollinearen Diagramm, das ein Relativdrehzahlverhältnis mit einer geraden Linie darstellt, angeordnet sind, bei der

eines von dem ersten und dem dritten Element drehend mit dem Motor/Generator verbunden ist; das andere von dem ersten und dem dritten Element drehend mit dem Antriebsrad verbunden ist; und das zweite Element drehend mit der Eingangswelle verbunden ist.

4. Hybridantriebsvorrichtung nach einem der Ansprüche 1 bis 3, bei der das Kontaktpunktdetektionsmittel (40) den Kontaktpunkt lediglich dann detektiert, wenn die Drehzahl der Eingangswelle innerhalb einer erlaubten Drehzahl mit einem vorbestimmten erlaubten Drehzahlbereich liegt.

5. Hybridantriebsvorrichtung nach einem der Ansprüche 1 bis 4, bei der das Zustandsänderungsdetektionsmittel (31, 40, MG1-1) eine Änderung der Drehzahl des Motors/Generators als eine Zustandsänderung des Motors/Generators detektiert.

6. Hybridantriebsvorrichtung nach einem der Ansprüche 1 bis 4, bei der das Zustandsänderungsdetektionsmittel (31, 40, MG1-1) eine Drehmomentänderung einer Drehantriebskraft, die durch den Motor/Generator erzeugt wird, als eine Zustandsänderung des Motors/Generators detektiert.

7. Hybridantriebsvorrichtung nach einem der Ansprüche 1 bis 6, bei der das Kontaktpunktdetektionsmittel (40) eine erste Kontaktpunktdetektionsstartverarbeitung (S11-S14) ausführt, indem der Kontaktpunkt durch Ändern des Zustands des Motors/Generators durch allmählichen Eingriff der Kupplung, die in dem getrennten Zustand war, detektiert wird, und nach der Detektion des Kontaktpunkts den Eingriff der Kupplung löst.

8. Hybridantriebsvorrichtung nach einem der Ansprüche 1 bis 6, bei der das Kontaktpunktdetektionsmittel (40) eine zweite Kontaktpunktdetektionsstartverarbeitung (S21-S33) ausführt, indem der Kontaktpunkt durch Detektieren des Zustands des Motors/Generators bei einem Eingriff der Kupplung, die in dem getrennten Zustand war, detektiert wird, wenn die Brennkraftmaschine gestoppt ist.

9. Hybridantriebsvorrichtung nach Anspruch 7 oder 8, bei der im Rahmen der ersten Kontaktpunktdetektionsstartverarbeitung (S11-S14) das Kontaktpunktdetektionsmittel den Kontaktpunkt durch Ändern des Zustands des Motors/Generators durch allmählichen Eingriff der Kupplung, die in dem getrennten Zustand war, detektiert, wenn das Kontaktpunktdetektionsmittel beurteilt, dass eine vorbestimmte erste definierte Zeit oder mehr seit einer vorherigen Detektion des Kontaktpunkts im Rahmen der ersten Kontaktpunktdetektionsstartverarbeitung oder im Rahmen einer zweiten Kontaktpunktdetektionsstartverarbeitung (S21-S33) vergangen ist, und nach der Detektion des Kontaktpunkts den Eingriff der Kupplung freigibt, und im Rahmen der zweiten Kontaktpunktdetektionsverarbeitung das Kontaktpunktdetektionsmittel den Kontaktpunkt durch Änderung des Zustands des Motors/Generators beim Eingriff der Kupplung, die in dem getrennten Zustand war, detektiert, wenn das Kontaktpunktdetektionsmittel beurteilt, dass eine vorbestimmte zweite definierte Zeit oder mehr seit einer vorherigen Detektion des Kontaktpunkts im Rahmen der ersten Kontaktpunktdetektionsstartverarbeitung oder im Rahmen der zweiten Kontaktpunktdetektionsstartverarbeitung vergangen ist, wobei die vorbestimmte zweite definierte Zeit kürzer als die vorbestimmte erste definierte Zeit eingestellt ist.

**Revendications**

1. Dispositif d'entraînement hybride (100) comprenant :

un moteur (EG) qui délivre en sortie une force d'entraînement en rotation à un arbre de sortie ;

un arbre d'entrée (51) qui est mis en rotation en association avec une rotation d'une roue motrice ;

un embrayage (20) disposé entre l'arbre de sortie et l'arbre d'entrée pour lier et désolidariser l'arbre de sortie et l'arbre d'entrée ;

un moteur/générateur (MG1, MG2) qui est mis en rotation en association avec une rotation de l'arbre d'entrée,

**caractérisé par**

un moyen de détection de changement d'état (31, 40, MG1-1) pour détecter un changement d'état du moteur/générateur ; et

un moyen de détection de point de contact (40) pour détecter un état d'embrayage au moment où le changement d'état du moteur/générateur est détecté par le moyen de détection de changement d'état lors de la mise en prise de l'embrayage qui est dans un état désolidarisé, en tant que point de contact où l'embrayage débute la mise en prise, dans lequel le moyen de détection de changement d'état (31, 40, MG1-1) détecte le changement de la vitesse de rotation du moteur/générateur et le changement du couple de la force d'entraînement en rotation générée par le moteur/générateur, et

le moyen de détection de point de contact détecte le point de contact sur la base du changement de la vitesse de rotation du moteur/générateur et dans le même temps détecte une détection erronée du point de contact détecté par le changement du couple du moteur/générateur, ou le moyen de détection de point de contact détecte le point de contact sur la base d'un changement du couple du moteur/générateur et dans le même temps détecte une détection erronée du point de contact détecté sur la base du changement de la vitesse de rotation du moteur/générateur.

2. Dispositif d'entraînement hybride selon la revendication 1, dans lequel le moyen de détection de point de contact détecte le point de contact en définissant une vitesse de rotation de l'arbre d'entrée en tant que vitesse de rotation d'arbre d'entrée cible (ωit) en commandant une rotation du moteur/générateur.

3. Dispositif d'entraînement hybride selon la revendication 1 ou la revendication 2, dans lequel un mécanisme planétaire (10) est fourni qui inclut un premier élément (11), un deuxième élément (13) et un troisième élément (14) agencés dans l'ordre avec une distance correspondant à un rapport de transmission sur un graphique colinéaire qui représente un rapport de vitesse de rotation relatif avec une ligne droite, dans lequel

l'un des premier et troisième éléments est relié au moteur/générateur par rotation ;

l'autre des premier et troisième éléments est relié à la roue motrice par rotation ; et

le deuxième élément est relié à l'arbre d'entrée par rotation.

4. Dispositif d'entraînement hybride selon l'une quelconque des revendications 1 à 3, dans lequel le moyen de détection de point de contact (40) détecte le point de contact uniquement lorsque la vitesse de rotation de l'arbre d'entrée est comprise dans une vitesse de rotation permise ayant une plage de vitesse de rotation permise prédéterminée.

5. Dispositif d'entraînement hybride selon l'une quelconque des revendications 1 à 4, dans lequel le moyen de détection de changement d'état (31, 40, MG1-1) détecte un changement de vitesse de rotation du moteur/générateur en tant que changement d'état du moteur/générateur.

6. Dispositif d'entraînement hybride selon l'une quelconque des revendications 1 à 4, dans lequel le moyen de détection de changement d'état (31, 40, MG1-1) détecte un changement de couple d'une force d'entraînement en rotation générée par le moteur/générateur en tant que changement d'état du moteur/générateur.

7. Dispositif d'entraînement hybride selon l'une quelconque des revendications 1 à 6, dans lequel le moyen de détection de point de contact (40) exécute un premier traitement de départ de détection de point de contact (S11-S14) en détectant le point de contact en changeant l'état du moteur/générateur en mettant graduellement en prise l'embrayage qui était dans l'état désolidarisé et après la détection du point de contact, libère la mise en prise de l'embrayage.

8. Dispositif d'entraînement hybride selon l'une quelconque des revendications 1 à 6, dans lequel le moyen de détection de point de contact (40) exécute un second traitement de départ de détection de point de contact (S21-S33) en détectant le point de contact en détectant l'état du moteur/générateur lors de la mise en prise de l'embrayage qui était dans l'état désolidarisé lors de l'arrêt du moteur.

9. Dispositif d'entraînement hybride selon la revendication 7 ou 8, dans lequel dans le premier traitement de départ de détection de point de contact (S11-S14), le moyen de détection de point de contact détecte le point de contact en changeant l'état du moteur/générateur en mettant graduellement en prise l'embrayage qui était dans l'état désolidarisé lorsque le moyen de détection de point de contact juge qu'un premier temps défini prédéterminé ou plus s'est écoulé depuis une précédente détection du point de contact dans le premier traitement de départ de détection de point de contact ou dans un second traitement de départ de détection de point de contact (S21-S33) et après la détection du point de contact, libère la mise en prise de l'embrayage et dans le second traitement de détection de point de contact, le moyen de détection de point de contact détecte le point de contact en changeant l'état du moteur/générateur lors de la mise en prise de l'embrayage qui était dans l'état désolidarisé lorsque le moyen de détection de point de contact juge qu'un second temps défini prédéterminé ou plus s'est écoulé depuis une précédente détection du point de contact dans le premier traitement de départ de détection de point de contact ou dans le second traitement de départ de détection de point de contact, dans lequel le second temps défini prédéterminé est défini pour être plus court que le premier temps défini prédéterminé.

# Fig. 1

# Fig. 2A

# Fig. 2B

$\bigcirc \omega e$: Engine rpm
$\bullet \omega i$: Input shaft rpm

# Fig. 3

```
   ┌─────────────────────────────────────┐
   │   First touch point detection start │
   └─────────────────────────────────────┘
                     │
                     ▼
              ╱─────────────╲          S11
         ╱ Vehicle being running by ╲   NO
        ⟨ rotation drive force by    ⟩────────▶
         ╲ second motor/generator   ╱
          ╲ MG2 only or stopping ? ╱
              ╲─────────────╱
                     │ YES
                     ▼
              ╱─────────────╲          S12
         ╱ First defined time ╲        NO
        ⟨ elapsed from the      ⟩──────────▶
         ╲ previous detection  ╱
          ╲ of touch point?   ╱
              ╲─────────────╱
                     │ YES
                     ▼
      ┌───────────────────────────────┐
      │ Touch point detection processing│  S13
      └───────────────────────────────┘
                     │
                     ▼
      ┌───────────────────────────────┐
      │        Clutch released        │  S14
      └───────────────────────────────┘
```

# Fig. 4

```
      ┌──────────────────────────────────────────┐
      │      Second touch point detection start    │
      └──────────────────────────────────────────┘
                          │
                          ▼
                   ╱───────────╲           S21
                  ╱  Engine start ╲          NO
                 ╱   condition      ╲───────────
                 ╲   established?    ╱
                  ╲                 ╱
                   ╲───────────────╱
                          │ YES
                          ▼
                   ╱───────────────╲          S22
                  ╱  Second defined   ╲         NO
                 ╱  time elapsed from   ╲──────────
                 ╲  previous touch      ╱
                  ╲  point detection ?  ╱
                   ╲─────────────────╱
                          │ YES
                          ▼
              ┌────────────────────────────┐
              │ Touch point detection        │─ S23
              │ processing                   │
              └────────────────────────────┘
                          │
                          ▼
              ┌────────────────────────────┐
              │ Allowable clutch engagement  │─ S24
              │ difference rotation speed    │
              │ calculation                  │
              └────────────────────────────┘
                          │
                          ▼
              ┌────────────────────────────┐
              │ MG1 rotation speed control   │─ S25
              └────────────────────────────┘
                          │
                          ▼
              ┌────────────────────────────┐
              │ Target clutch transmission   │─ S26
              │ torque calculation           │
              └────────────────────────────┘
                          │
                          ▼
              ┌────────────────────────────┐
              │ Clutch transmission torque   │─ S27
              │ control                      │
              └────────────────────────────┘
                          │
                          ▼
              ┌────────────────────────────┐
              │ Setting and renewing ωit     │─ S28
              └────────────────────────────┘
                          │
                          ▼
              ┌────────────────────────────┐
              │ Rotation speed control of MG1│─ S29
              └────────────────────────────┘
                          │
                          ▼
              ┌────────────────────────────┐
              │ First engine start processing│─ S30
              └────────────────────────────┘
                          │
                          ▼
                   ╱───────────╲           S31
                  ╱             ╲            NO
                 ╱   ωe = ωi ?    ╲───────────
                 ╲               ╱
                  ╲─────────────╱
                          │ YES
                          ▼
              ┌────────────────────────────┐
              │ Clutch complete engagement   │─ S32
              └────────────────────────────┘
                          │
                          ▼
              ┌────────────────────────────┐
              │ Second engine start          │─ S33
              │ processing                   │
              └────────────────────────────┘
```

$\omega e = \omega i?$

## Fig. 5

```
        ┌─────────────────────────────┐
        │ First engine start processing │
        └─────────────────────────────┘
                      │
                      ▼
                                      S30-1
                  ◇                    NO
         Engine already started? ─────────────┐
                  ◇                            │
                  │                            ▼
                 YES                                    S30-2
                  │                       ◇              NO
                  │               Engine rpm ωe≧ ────────────┐
                  │                  Starting rpm?            │
                  │                       ◇                   │
                  │                      YES                  │
                  │                       │                   │
                  │                       ▼                   │
                  │            ┌──────────────────┐           │
                  │            │   Engine start    │ S30-3    │
                  │            └──────────────────┘           │
                  │                       │                   │
                  │         ◄─────────────┘                   │
                  │                                           │
                  │         ◄─────────────────────────────────┘
                  ▼
        ┌─────────────────────────────┐
        │             End             │
        └─────────────────────────────┘
```

27

# Fig. 6

```
        ┌─────────────────────────────────┐
        │ Second engine start processing  │
        └─────────────────────────────────┘
                        │
                        ▼
                                      ⌐S33-1
                  ◇─────────────────◇  NO
                 Engine already started? ──────────────────────┐
                  ◇─────────────────◇                          │
                        │ YES                                  │
                        │                          ⌐S33-2      │
                        │              ◇──────────────────◇ NO │
                        │            Engine rpm ωe≧          ──┤
                        │              Starting rpm?           │
                        │              ◇──────────────────◇    │
                        │                    │ YES             │
                        │                    ▼                 │
                        │         ┌──────────────────────┐     │
                        │         │     Engine start     │~S33-3│
                        │         └──────────────────────┘     │
                        │                    │                 │
                        ◄────────────────────┘                 │
                        │                    │                 │
                        │                    ▼                 │
                        │     ┌──────────────────────────┐     │
                        │     │ MG1 rotation speed increased │~S33-4│
                        │     └──────────────────────────┘     │
                        │                    └─────────────────┘
                        ▼
        ┌─────────────────────────────────┐
        │              End                │
        └─────────────────────────────────┘
```

# Fig. 7

```
        ( Touch point detection of first embodiment )
                            │
                            ▼
          ┌─────────────────────────────────────┐
          │  Setting target input shaft rotation speed │ ─S51
          └─────────────────────────────────────┘
                            │
                            ▼  ◄─────────────────┐
          ┌─────────────────────────────────────┐ │
          │        MG1 rotation speed control        │ ─S52 │
          └─────────────────────────────────────┘ │
                            │                       │
                            ▼              ─S53      │
                      ◇ Input shaft rotation speed ◇  NO │
                      ◇ corresponds to target input ◇ ───┘
                      ◇   shaft rotation speed?   ◇
                            │ YES
        ┌──────────────────▼───────────────┐
        │                  ▼                 │
        │   ┌─────────────────────────────┐ │
        │   │  Control clutch to engagement side │ ─S54
        │   └─────────────────────────────┘
        │                  │            ─S55
        │                  ▼
        │            ◇ Input shaft rotation speed ◇  NO
        │            ◇   within allowable rotation   ◇ ──┐
        │            ◇       speed range?        ◇       │
        │                  │ YES                          │
        │                  ▼            ─S56              │
        │        NO  ◇  MG1 State change? ◇              │
        └───────────◇                      ◇             │
                            │ YES                          │
          ┌─────────────────▼────────────────┐           │
          │ Memorize clutch state value as detection │ ─S57 │
          │  value of touch point of this time   │           │
          └──────────────────────────────────┘           │
                            │                              │
          ┌─────────────────▼────────────────┐           │
          │  Renew clutch state value at touch point │ ─S58 │
          └──────────────────────────────────┘           │
                            │                              │
                            ▼  ◄──────────────────────────┘
                        (   End   )
```

# Fig. 8

```
        ┌────────────────────────────┐
        │  Touch point detection of   │
        │     second embodiment       │
        └────────────────────────────┘
                      │
                      ▼
        ┌────────────────────────────┐
        │ Setting target input shaft  │─ S61
        │      rotation speed         │
        └────────────────────────────┘
                      │
                      ▼  ◄──────────────────┐
        ┌────────────────────────────┐      │
        │   MG1 rotation speed control │─ S62 │
        └────────────────────────────┘      │
                      │                     │
                      ▼                     │
              ╱ Input shaft rotation ╲  S63 │
             ╱ speed corresponds to   ╲ NO  │
             ╲ target input shaft     ╱─────┘
              ╲  rotation speed ?    ╱
                      │ YES
      ┌───────────────▼
      │       ┌────────────────────────────┐
      │       │ Control clutch to engagement│─ S64
      │       │          side               │
      │       └────────────────────────────┘
      │                 │
      │                 ▼
      │          ╱ Input shaft rotation ╲  S65
      │         ╱  speed within allowable ╲ NO
      │         ╲  rotation speed range?  ╱───────┐
      │          ╲                       ╱        │
      │                 │ YES                     │
      │                 ▼                         │
      │          ╱    MG1           ╲  S66        │
      │  NO     ╱ state A changed equal╲          │
      └────────╱ to or more than        ╲         │
               ╲ predetermined defined  ╱         │
                ╲    amount?           ╱          │
                      │ YES                       │
                      ▼                           │
              ╱ MG1 state B changed ╲  S67         │
              ╲ within a limited amount ? ╱ NO ────┤
                      │ YES                        │
                      ▼                            │
        ┌────────────────────────────┐             │
        │  Memorize clutch state value│─ S68        │
        │  at touch point of this time│             │
        └────────────────────────────┘             │
                      │                            │
                      ▼                            │
        ┌────────────────────────────┐             │
        │ Renew clutch state value at │─ S69        │
        │        touch point          │             │
        └────────────────────────────┘             │
                      │  ◄──────────────────────────┘
                      ▼
              ┌──────────────┐
              │     End      │
              └──────────────┘
```

# Fig. 9

Stand-by position change processing

Clutch state value at
touch point renewed? ⌒S91

NO

YES

Renew clutch stand-by position ⊢S92

# Fig. 10

EP 2 881 294 B1

**EP 2 881 294 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010076678 A
- JP 4751537 B
- JP 2012086596 A
- JP 2009103305 A